# EUROPEAN PATENT SPECIFICATION

(11) **EP 4 263 668 B1**
(45) Date of publication and mention of the grant of the patent: **22.04.2026**
(21) Application number: 21823936.6
(22) Date of filing: 10.12.2021
(51) Int. Cl.: C08G 65/40, C08G 75/23, C08J 5/00, C08K 3/00, C08K 5/00, C08L 71/02, C08L 81/06

(54) **BIO-BASED SULFONE COPOLYMERS FREE OF BPA AND BPS**
BPA- UND BPS-FREIE, BIOBASIERTE SULFONCOPOLYMERE
COPOLYMÈRES DE SULFONE D'ORIGINE BIOLOGIQUE EXEMPTS DE BPA AND BPS

(30) Priority: 18.12.2020 US 202063127170 P; 04.03.2021 EP 21160654
(43) Date of publication of application: 25.10.2023
(73) Proprietor: Syensqo Specialty Polymers USA, LLC, Alpharetta, GA 30005-3914 (US)
(72) Inventor: BHATNAGAR, Atul, Alpharetta, Georgia 30005 (US); GAUTAM, Keshav S., Suwanee, Georgia 30024 (US)
(74) Representative: Ferri, Isabella
(86) International application number: PCT/EP2021/085287
(87) International publication number: WO 2022/128815

(56) References cited:
- EP-A1- 3 170 855
- EP-A1- 3 653 661
- WO-A1-2016/032179
- WO-A1-2020/039127
- KR-B1- 101 973 671
- CHAOUKI BELGACEM ET AL: "Copolyethersulfones of 1,4:3,6-dianhydrohexitols and bisphenol A", DESIGNED MONOMERS AND POLYMERS, vol. 19, no. 3, 29 January 2016 (2016-01-29), pages 248 - 255, XP055585593, DOI: 10.1080/15685551.2015.1136531
- SABER CHATTI ET AL: "Poly(ether sulfone) of Isosorbide, Isomannide and Isoidide", HIGH PERFORMANCE POLYMERS, INSTITUTE OF PHYSICS PUBLISHING, BRISTOL, GB, vol. 21, no. 1, 1 February 2009 (2009-02-01), pages 105 - 118, XP008151327, ISSN: 0954-0083, DOI: 10.1177/0954008308088296

## Description

### CROSS-REFERENCE TO RELATED APPLICATIONS

This application claims priority to U.S provisional application US 63/127170 filed on December 18, 2020 and to European patent application EP 21160654.6 filed on March 4, 2021.

### TECHNICAL FIELD

The present invention pertains to a bio-based polyarylene ether sulfone copolymer b-PAES derived from a bisphenolic compound with at least one substituted-phenol group, at least one bio-based diol monomer and a dihalo monomer, to a process for manufacturing such copolymer, to a polymer solution containing such copolymer, to articles comprising or made from such copolymer, and to its use for the manufacture of articles. The copolymer b-PAES and articles comprising it or made therefrom are particularly free of 4,4'-dihydroxydiphenyl sulfone (BPS) and 4,4'-isopropylidenediphenol (BPA).

### BACKGROUND

Poly(aryl ether sulfone) (PAES) polymers are a class of thermoplastic polymers characterized by high glass-transition temperatures, good mechanical strength and stiffness, and outstanding thermal and oxidative resistance. By virtue of their mechanical, thermal, and other desirable characteristics, these polymers are used increasingly making products for a wide and diversified range of commercial applications, for instance in coatings, in membranes for wide field of use including medical market, due to their excellent mechanical and thermal properties, coupled with outstanding hydrolytic stability. PAES is a generic term used to describe any polymer containing at least one sulfone group (-SO₂-), at least one ether group (-O-) and at least one arylene group.

A commercially important group of PAES includes polysulfone polymers identified herein as polysulfones, in short PSU. PSU polymers contain recurring units derived from the condensation of the dihydroxy monomer bisphenol A (BPA) and a dihalogen monomer, for example 4,4'-dichlorodiphenyl sulfone (DCDPS). Such PSU polymers are commercially available from Solvay Specialty Polymers USA LLC under the trademark UDEL^{®}. The structure of the recurring units of such a PSU polymer is shown below:

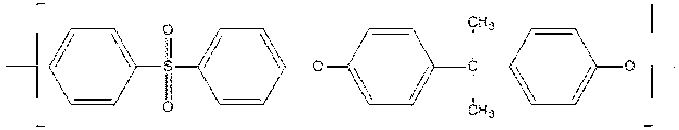

PSU polymers have a high glass transition temperature (e.g., about 185°C) and exhibit high strength and toughness.

Another important group of PAES includes polyethersulfone polymers, in short PES. PES polymers derive from the condensation of the dihydroxy monomer bisphenol S (BPS) and a dihalogen monomer, for example 4,4'-dichlorodiphenyl sulfone (DCDPS). Such PES polymers are commercially available from Solvay Specialty Polymers USA LLC under the trademark VERADEL^{®}. The structure of the recurring units of such a PES polymer is shown below:

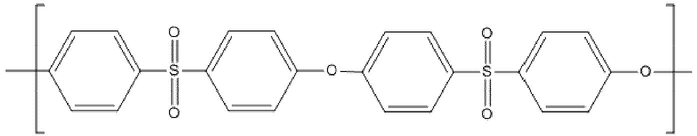

PSU and PES polymers, respectively based on BPA and BPS, are frequently used to prepare membranes to be used in contact with biological fluids, for example blood.

BPA and BPS are industrial chemicals that have been present in many articles, including plastic bottles and food and beverage cans since the 1960s. In recent years, concerns have been raised about BPA and BPS's safety. BPS and BPA are suspected to be endocrine disruptive in nature, albeit without conclusive research, and their impact on the environment and human health is still under investigation. In view of this controversy, the market is looking for economically viable alternatives to BPA and BPS.

Previous efforts in developing new polymeric materials made from monomers which have weak binding affinity for estrogen receptors can be found for example in US 2014/0113093 (SOLVAY SPECIALTY POLYMERS USA, LLC) and by work done by Sundell and coworkers (Sundell et al. (2014) Polymer, vol. 55(22), pp. 5623-5634).

Because polymeric materials in contact with food and drugs must meet certain requirements mandated by for instance the FDA, the European Food Safety Agency and the Environmental Protection Agency (EPA), it is important to continue developing polymeric materials that are safe both for humans and environment for applications requiring contact with water, food, drugs and/or blood.

The development of renewable polymers derived from bio-based feedstocks is also of particular interest. This is part of efforts oriented towards reduction of the amount of petroleum consumed in the chemical industry and to open new high-value-added markets to agriculture; 1,4:3,6-dianhydrohexitols are examples of such chemicals used as bio-based feed-stock.

Interest in the production of 1,4:3,6-dianhydrohexitols, especially isosorbide, has been generated by potential industrial applications including the synthesis of polymers such as notably polyesters, polyethers, polyurethanes and polyamides. The use of 1,4:3,6-dianhydrohexitols in polymers, and more specifically in polycondensates, can be motivated by several features: they are rigid molecules, chiral, and non-toxic. For these reasons, there are expectations that polymers with high glass transition temperature and/or with special optical properties can be synthesized.

The industrial production of such monomers is a developing area, quickly making available this feedstock at more and more attractive prices. Moreover, interest in chemicals derived from renewable resources is increasing and becoming a decisive argument: as the carbon contained in bioplastics is not derived from fossilized biomass, but from atmospheric CO₂ absorbed by vegetal biomass, these plastics should alleviate the effects of climate change.

Because of their bicyclic constrained geometry and their oxygenated rings, 1,4:3,6-dianhydrohexitols can deliver advantageous features when incorporated into poly aryl ether sulfone structures. Also the innocuous character of the molecules opens the possibility of applications in packaging or medical devices, e.g., for hemodialysis membranes.

Depending on the chirality, three isomers of the 1,4:3,6-dianhydrohexitols sugar diol exist, namely isosorbide (1), isomannide (2) and isoidide (3) :

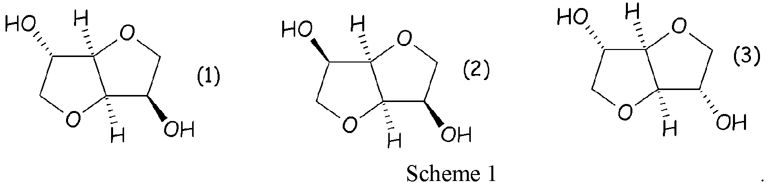

The 1,4:3,6-dianhydrohexitols are composed of two cis-fused tetrahydrofuran rings, nearly planar and V-shaped with a 120° angle between rings. The hydroxyl groups are situated at carbons 2 and 5 and positioned on either inside or outside the V-shaped molecule, as shown in Scheme 1. They are designated, respectively, as endo or exo. A summary of the manufacture of these 1,4:3,6-dianhydrohexitols can be found in US 2015/0011446A1 (SOLVAY SPECIALTY POLYMERS ITALY, SpA).

Kricheldorf et al. first reported the preparation and characterization of poly(ether sulfone)s containing isosorbide from silylated isosorbide and difluorodiphenylsulfone (DFDPS) in 1995 **(**H. Kricheldorf, M. Al Masri, J. Polymer Sci., Pt A: Polymer Chemistry, 1995, 33, 2667-2671**).** Since the silylation step adds significant cost. Kricheldorf and Chatti (High Performance Polymers, 2009, 21, 105-118**)** modified their polymerization conditions and reported that poly(ether sulfone)s containing isosorbide could be made from pure isosorbide and DFDPS. The highest apparent molecular weight polymer obtained had an inherent viscosity (IV) of 0.65 dL/g, said IV was measured according to following conditions : CH₂Cl₂/trifluoroacetic acid solution (9/1 v/v) at 20°C, 0.20 dL/g. The glass transition temperature of this polymer was reported as 245°C. No examples were described where the polymerization reaction with isosorbide was conducted with the less reactive dichlorodiphenylsulfone (DCDPS).

More recent developments have made available some polyethersulfones comprising isosorbide groups through simpler and more effective synthetic methods, thereby delivering materials of higher molecular weight through an approach which can be scaled up to industrial level. Hence, WO 2014/072473 (SOLVAY SPECIALTY POLYMERS USA, LLC) provides for an improved method of making poly(arylether sulfone) polymers from 1,4:3,6-dianhydrohexitol and certain dihaloaryl compounds which enables obtaining polymers having increased molecular weight. Polysulfone isosorbide materials described therein are taught as notably useful for the manufacture of membranes, although no specific example of the actual manufacture of membranes, and more specifically of hollow fiber membranes, is provided.

EP3170855A1 and corresponding WO2016/032179A1 (SAMYANG CORP.) relate to a polysulfone copolymer with excellent heat resistance and chemical resistance, comprising repeat units derived from diol component comprising anhydrosugar alcohol and repeat units derived from dihalogenated sulfone compound. Examples 1-6 (Table 1) describe copolymers made from condensation of dichlorodiphenylsulfone (DCDPS) and two diols: bisphenol A (BPA) and isosorbide (ISB) having BPA/ISB molar ratios ranging from 0.95:0.05 to 0.3-0.7. Examples 7-9 (Table 2) describe copolymers made from condensation of DCDPS and ISB and at least one of two diols: dihydroxydiphenylsulfone and/or cyclohexanedimethanol. Examples 10-11 (Table 3) describe copolymers made from condensation of DCDPS and at least two diols: ISB with 4,4-biphenol and optionally cyclohexanedimethanol.

WO2020/039127A1 (ROQUETTE FRERES, UNIV. CLAUDE BERNARD LYON et al.) relates to a method for producing a block copolymer of the poly-ethersulfone type containing a biosourced diol, to a block copolymer that can be obtained by said method, and to the use of said block copolymer for producing membranes. Example 1 uses 50:50 mol % bisphenol A (BPA) : isosorbide (ISO) in a block copolymer made with in a first reaction : 1 Eq. ISO +1.076 Eq. dichlorodiphenylsulfone (DCDPS) with 2 Eq. K₂CO₃ in dimethylsulfoxide (DMSO), and in a second reaction:1 Eq. **BPA** + 1 Eq. DCDPS with 2 Eq. K₂CO₃ in N-Methyl-2-pyrrolidone (NMP) and toluene.

An article by BELGACEM and coworkers ( "Copolyethersulfones of 1,4:3,6-dianhydrohexitols and bisphenol A", DESIGNED MONOMERS AND POLYMERS, vol. 19, no. 3, 29 January 2016, pages 248-255) relates to copolyethersulfones of 1,4:3,6-dianhydrohexitol and bisphenol A (BPA). The introduction of controlled proportions of BPA serves two purposes: 1/ to maintain goof thermal balance and mechanical properties of resulting copolymers; 2/ to insure low-cost route to copolyethersulfones for industrial applications. In the experimental section, on pages 249-250 and Table 3, the copolymers are made by polycondensation of difluorodiphenylsulfone with BPA and isosorbide (ISO) with ISO:BPA molar ratios of 0:10, 3:7, 5:5, and 10:0.

EP3653661A1 (KOREA RES. INST. CHEMICAL TECH.) relates to a method for preparing a polyarylene ether copolymer comprising isohexide units and particularly an ultra-high molecular weight polyarylene ether copolymer comprising isohexide units by comprising a procedure of adding a crown ether-based compound, particularly 18-crown-6-ether used in Examples 1-8 when polyarylene ether sulfone copolymers are made from 4,4'-difluorodiphenylsulfone (Ex. 1-7)) or 4,4'-dichlorodiphenylsulfone (Ex. 8) with isosorbide and optionally bisphenol A (Ex. 6, 8).

KR101973671B1 (SAMYANG CORP.) relates to the method for manufacturing a polysulfone copolymer which contains a sulfone-based compound as a repeating unit and an anhydrosugar alcohol as a biogenic material, thereby being eco-friendly, and has a low viscosity-average molecular weight than that of an existing polysulfone copolymer, thereby being able to manufacture the polysulfone copolymer suitable for processing characteristics required for 3D printing filaments at an improved yield. Examples 1-8 all use Bisphenol A (BPA) and isosorbide (ISB) with molar ratios BPA:ISO from 0.95:0.05 to 0.7:0.3.

An article by CHATTI and coworkers ("Poly(ether sulfone) of Isosorbide, Isomannide and Isoidide", HIGH PERFORMANCE POLYMERS, Institute of Physics Publishing, Bristol, GB, vol. 21, no. 1, 01 February 2009, pages 105-118) relates to polyethersulfones made by polycondensation of isosorbide, isomannide and/or isoidide with difluorodiphenylsulfone.

While a polysulfoneisosorbide made with bio-sourced and sustainable isosorbide is also regarded as an endocrine safe polymer, its manufacture requires the use of DFDPS (as opposed to DCDPS) to obtain high molecular weight polymer. However the DFDPS monomer is much more expensive than DCDPS and its use requires a manufacturing plant made with expensive metallurgy (e.g., with Hastalloy^{®} alloy).

Therefore the present invention aims to address several challenges linked to process economics, use of biosourced monomer(s) and use of bisphenol monomer(s) which lessen the impact of endocrine disruption potential:
- reducing the economic constraint of making a poly(ether sulfone) containing isosorbide, isoidide, and/or isomannide by using a more cost-effective halogenic sulfone monomer (like DCDPS) while still achieving reasonable molecular weight (e.g., > 55 kDa) for the poly(ether sulfone); and
- reducing or eliminating the endocrine disruption potential of existing poly(ether sulfone) materials - which are typically made from Bisphenol A (BPA) or Bisphenol S (BPS) - in order for their use in applications where contact with food, drugs, blood and/or water takes places, such as in membrane markets.

### SUMMARY

The present invention relates to a bio-based poly(arylether sulfone) copolymer ("copolymer b-PAES") that is preferably BPA and BPS free. In other words the copolymer b-PAES preferably comprises sulfone recurring units derived from dihydroxy monomers which are distinct from BPS and BPA.

This copolymer b-PAES preferably should have no or reduced endocrine disruption potential compared to PAES polymers/co-polymers made from BPA or BPS.

Such copolymer b-PAES is characterized by having high molecular weights (M_{w}) and having excellent thermal stability, good hydrophilicity, high stiffness and strength, good toughness and attractive impact properties; allowing to provide similar or improved performance relative to current commercial PAES grades made from BPA or BPS for applications such as membranes, coatings, additive manufacturing and 3D printing. A good hydrophilicity is particularly advantageous in filtration applications, e.g., for reducing overpressure required for filtrating aqueous media.

This copolymer b-PAES comprises at least two sulfone recurring units derived from two distinct dihydroxy monomers: a bio-compatible and bio-based diol monomer and a bisphenol monomer distinct from BPS and BPA. The bisphenol monomer comprises a bisphenolic compound with at least one alkyl substituted-phenol group, said bisphenolic compound being distinct from BPS and BPA. The bisphenol monomer preferably comprises a bisphenol F derivative with both alkyl substituted-phenol groups, where bisphenol F (BPF) is 4,4'-dihydroxydiphenylmethane. The bisphenol monomer more preferably excludes BPF, BPA and/or BPS. In some alternate or additional embodiments, the bisphenol monomer excludes 4,4'-biphenol.

With the presence of the at least two different sulfone recurring units, the hydrophilicity of such copolymer b-PAES may be adjusted by varying the relative amounts of these different sulfone recurring units. For example, if it is desirable to increase the hydrophilicity of the copolymer b-PAES, then the amount of sulfone recurring units derived from the bio-based diol mononer can be increased relative to the other sulfone recurring unit derived from the dihydroxy bisphenol monomer distinct from BPS and BPA.

A first aspect of the present invention relates to a sulfone copolymer b-PAES, comprising:
a) recurring units (Rₐ) of formula (I): 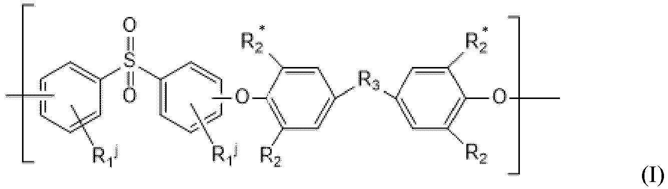 wherein:
   - each R₁ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ; and
   - j is zero or an integer of 1 to 4;
   - each R₂ is at each location independently selected from H or an alkyl having from 1 to 5 carbon atoms, preferably an alkyl having from 1 to 5 carbon atoms, preferably an alkyl having from 1 to 5 carbon atoms, more preferably methyl at each location,
   - each R₂* is at each location independently selected from an alkyl having from 1 to 5 carbon atoms, preferably methyl at each location; and
   - R₃ is represented by a cycloalkyl having from 5 to 8 carbon atoms or -CR^{p}R^{q}-, wherein each of R^{p} and R^{q} is independently selected from H, an alkyl having from 1 to 10 carbon atoms, an aromatic mono- or polynuclear group, or a cycloalkyl having from 5 to 8 carbon atoms, said aromatic mono- or polynuclear group or cycloalkyl being optionally substituted by at least one alkyl having from 1 to 10 carbon atoms; R₃ preferably being selected from -CH₂-, -C(CH₃)₂- 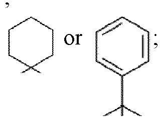 R₃ more preferably being selected from -CH₂- or -C(CH₃)₂-; and
b) recurring units (R_{b}) of formula (II) as shown below : 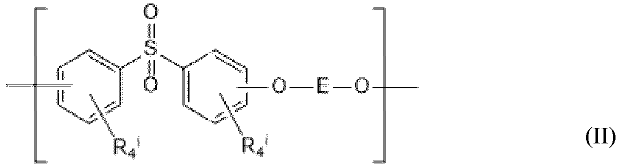 wherein :
   - each R₄ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ; and
   - i is zero or an integer of 1 to 4,
preferably R₄ and i in Formula (II) being the same as R₁ and j in Formula (I); and
- each of E, equal to or different from each other and at each occurrence, is selected from the group consisting of those of formulae (E'-I) to (E'-III):

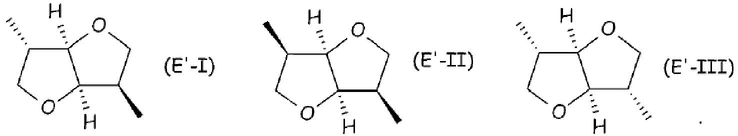

A second aspect of the present invention pertains to a process for manufacturing the copolymer b-PAES.

The process comprises reacting in a reaction mixture comprising a polar aprotic solvent and in the presence of an alkali metal carbonate, a monomers mixture comprising at least three different monomers.

The copolymer b-PAES is preferably derived from the condensation of the at least three different monomers.

The monomers mixture comprises:
- at least one aromatic dihydroxy monomer [dihydroxy (AA), hereinafter], comprising at least a monomer of formula (A): 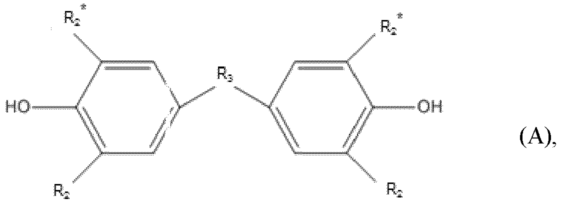
wherein
each R₂ is at each location independently selected from H or an alkyl having from 1 to 5 carbon atoms, preferably an alkyl having from 1 to 5 carbon atoms, more preferably methyl at each location;
each R₂* is at each location independently selected from an alkyl having from 1 to 5 carbon atoms, preferably methyl at each location; and
R₃ is represented by a cycloalkyl having from 5 to 8 carbon atoms or -CR^{p}R^{q}-, wherein each of R^{p} and R^{q} is independently selected from H, an alkyl having from 1 to 10 carbon atoms, an aromatic mono- or polynuclear group, or a cycloalkyl having from 5 to 8 carbon atoms, said aromatic mono- or polynuclear group or cycloalkyl being optionally substituted by at least one alkyl having from 1 to 10 carbon atoms; R₃ preferably being selected from -CH₂-, -C(CH₃)₂-, 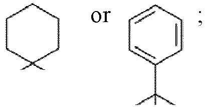
R₃ more preferably being selected from -CH₂- or -C(CH₃)₂-.

- at least one 1,4:3,6-dianhydrohexitol [diol (BB), hereinafter] selected from the group consisting of isosorbide (1), isomannide (2) and isoidide (3), and
- at least one dihaloaryl compound [dihalo (CC), hereinafter] of formula (C) : 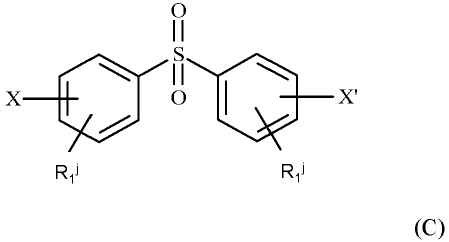
wherein :
- each of R₁, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j is zero or is an integer from 0 to 4, preferably j=0 ; and
- X and X', equal to or different from each other, are independently a halogen atom, preferably Cl or F, more preferably Cl.

The molar ratio between the overall amount of hydroxyl groups and overall amount of halo groups in the monomers mixture is from 0.95 to 1.05, preferably from 0.98 to 1.02, more preferably from 0.99 to 1.01, most preferably 1.0, so as to obtain the copolymer b-PAES.

A third aspect of the present invention relates to the use of the copolymer b-PAES for the manufacture of articles such as membranes, coatings, films, fibers and sheets, and three-dimensional injected or molded or printed parts.

A fourth aspect of the present invention relates to shaped articles made from or comprising the copolymer b-PAES described herein, said shaped articles being selected from the group consisting of membranes, melt processed films, solution processed films, melt process monofilaments and fibers, solution processed monofilaments, hollow fibers and solid fibers, printed objects, coatings, and injection and compression molded objects, preferably membranes being selected from membranes for bioprocessing and medical filtrations (such as hemodialysis membranes), membranes for food and beverage processing, membranes for water purification, membranes for waste water treatment and membranes for industrial process separations involving aqueous media.

A further aspect of the present invention is a polymer solution for preparing a membrane, comprising the copolymer b-PAES in a polar organic solvent.

The various aspects, advantages, and features of the invention will be more readily understood and appreciated by reference to the detailed description and examples.

### DEFINITIONS

In the present descriptive specification, some terms are intended to have the following meanings.

As used herein, the term "total weight % polymer" is defined as the weight of the polymer to be obtained based on the monomers initially present in the monomers mixture at the end of the reaction.

The term "solvent" is used herein in its usual meaning, that is to say, it indicates a substance capable of dissolving another substance (solute) to form a uniformly dispersed mixture at the molecular level. In the case of a polymeric solute it is common practice to refer to a solution of the polymer in a solvent when the resulting mixture is transparent and no phase separation is visible in the system. Phase separation is taken to be the point, often referred to as "cloud point", at which the solution becomes turbid or cloudy due to the formation of polymer aggregates.

As used herein, the acronym "BPA" means Bisphenol A or 4,4'-isopropylidenediphenol; the acronym "BPS" means Bisphenol S or 4,4'-dihydroxydiphenyl sulfone; and the acronym "BPF" means Bisphenol F or 4,4'-dihydroxydiphenylmethane.

As used herein and unless explicitly stated otherwise, "substantially free of" a component in a substance (such as reaction mixture, monomers mixture, a polymer, ...) means that the concentration of the component is no more than 1 wt.% or no more than 0.5 wt.% based on the total weight of such substance.

As used herein and unless explicitly stated otherwise, "free of" a component in a substance (such as reaction mixture, monomers mixture, a polymer, ...) means that the concentration of the component is no more than 0.1 wt.% or no more than 0.05 wt.%, based on the total weight of such substance.

For the purpose of the present invention, the expression "substantially all" in combination with a recited amount of recurring units is hereby intended to mean that minor amounts, generally below 1 mol%, preferably below 0.5 mol%, of other recurring units may be tolerated, e.g., as a result of lower purity in monomers used.

For the purpose of the present invention, the expression "substantially equimolecular" used with reference to the overall amount of dihydroxy (AA)/diol (BB) monomers and dihalo (CC) monomers in the monomers mixture is to be understood that the molar ratio between the overall amount of hydroxyl groups of the dihydroxy (AA)/diol (BB) monomers in the monomers mixture and overall amount of halogen groups of the dihalo (CC) monomers in the monomers mixture is from 0.95 to 1.05, preferably from 0.98 to 1.02, more preferably from 0.99 to 1.01, most preferably 1.0.The weight average molecular weight (M_{w}) can be estimated by gel-permeation chromatography (GPC) - also known as size exclusion chromatography - using ASTM D5296, calibrated with polystyrene standards and performed using methylene chloride as a mobile phase. The molecular weight (M_{w}) is defined as follows: 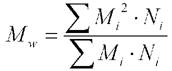 wherein the summation is over all the chain lengths from 1 to ∞ and Nᵢ is the number of molecules whose weight is Mᵢ.

In the present specification, the choice of an element from a group of elements also explicitly describes:
- the choice of two or the choice of several elements from the group,
- the choice of an element from a subgroup of elements consisting of the group of elements from which one or more elements have been removed.

In the passages of the present specification which will follow, any description, even though described in relation to a specific embodiment, is applicable to and interchangeable with other embodiments of the present disclosure. Each embodiment thus defined may be combined with another embodiment, unless otherwise indicated or clearly incompatible. In addition, it should be understood that the elements and/or the characteristics of a composition, a product or article, a process or a use, described in the present specification, may be combined in all possible ways with the other elements and/or characteristics of the composition, product or article, process or use, explicitly or implicitly, this being done without departing from the scope of the present description.

In the present application, where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components. Any element or component recited in a list of elements or components may be omitted from such list. Further, it should be understood that elements, embodiments, and/or features of processes or methods described herein can be combined in a variety of ways without departing from the scope and disclosure of the present teaching, whether explicit or implicit herein.

In the present specification, the description of a range of values for a variable, defined by a bottom limit, or a top limit, or by a bottom limit and a top limit, also comprises the embodiments where the variable is chosen, respectively, within the range of values: excluding the bottom limit, or excluding the top limit, or excluding the bottom limit and the top limit. Any recitation herein of numerical ranges by endpoints includes all numbers subsumed within the recited ranges as well as the endpoints of the range and equivalents.

The term "comprising" (or "comprise") includes "consisting essentially of" (or "consist essentially of") and also "consisting of" (or "consist of").

The use of the singular 'a' or 'one' herein includes the plural unless specifically stated otherwise.

### DETAILED DESCRIPTION OF PREFERRED EMBODIMENTS

The inventors have found that certain aromatic dihydroxy monomers which have low or no endocrine disruption potential and certain diols that originate from bio-based compounds can be used to successfully prepare a copolymer b-PAES with appropriate set of properties (notably molecular weight).

The copolymer b-PAES incorporating such monomers as well as articles comprising it or made therefrom (such as membranes to be used for purifying water or biological fluids) should exhibit low or reduced estrogenic activities compared to PAES polymers made from BPS or BPA, and therefore they should present lower risks for human health.

These bio-based copolymers b-PAES can also be effectively prepared using a less-expensive dihalo monomer (preferably DCDPS) thereby providing a more cost effective production. This is an improvement over previous PAES polymers made from diols originating from bio-based compounds which require the use of an expensive and more corrosive dihalo monomer: DFDPS, making scaling up of manufacturing plants a challenge in term of material of construction (e.g., Hasteloy^{®} alloys) and also making the economics of such manufacturing plants less favorable due to higher operational costs.

### Sulfone Copolymer b-PAES

The sulfone copolymer b-PAES according to preferred embodiments comprises, or consists essentially of, the recurring units (Rₐ) and (R_{b}) present in admixture.

The sulfone copolymer b-PAES may comprise
- at least 20 mol%, or at least 30 mol%, or at least 40 mol%, or at least 50 mol%, or at least 60 mol%, or at least 70 mol% of recurring units (Rₐ) with respect to all the recurring units of copolymer b-PAES,
   and/or
- at most 95 mol%, or at most 90 mol%, or at most 85 mol%, or at most 80 mol%, or at most 75 mol%, of recurring units (Rₐ) with respect to all the recurring units of copolymer b-PAES.

The sulfone copolymer b-PAES may comprise
- at least 5 mol%, or at least 10 mol% of recurring units (R_{b}) with respect to all the recurring units of copolymer b-PAES
   and/or
- at most 80 mol%, or at most 70 mol%, or at most 60 mol%, or at most 50 mol%, or at most 40 mol%, or at most 30 mol%, of recurring units (R_{b}) with respect to all the recurring units of copolymer b-PAES.

The sulfone copolymer b-PAES may comprise a molar ratio of the recurring units (R_{b}) to the recurring units (Rₐ) of at least 5:95, or at least 10:90 and/or at most 95:5, or at most 90: 10, or at most 50:50, or at most 30:70, or at most 25:75.

In preferred embodiments, the copolymer b-PAES comprises recurring units (Rₐ) and (R_{b}) in an amount of more than 50 % moles, preferably more than 60 % moles, more preferably more than 75 % moles, even more preferably more than 80 % moles, yet even more preferably more than 90 % or more than 95 % moles, most preferably more than 98 % or more than 99 % moles, with respect to all the recurring units of copolymer b-PAES.

In more preferred embodiments, substantially all recurring units in the copolymer b-PAES are the recurring units (Rₐ) and (R_{b}).

The copolymer b-PAES is preferably BPA free and BPS free.

In more preferred embodiments, the copolymer b-PAES preferably excludes at least one recurring unit selected from recurring units of formulae (j), (jj), (jjj) and (jv), defined later in relation to optional units (Rₛ).

In additional or alternate embodiments, the copolymer b-PAES is BPF free.

This copolymer b-PAES should have no or reduced endocrine disruption potential compared to PAES polymers/co-polymers made from BPA or BPS or BPF.

With the presence of the at least two different sulfone recurring units (Rₐ) and (R_{b}), the hydrophilicity of such copolymer b-PAES may be adjusted by varying their relative amounts of recurring units (Rₐ) and (R_{b}) in copolymer b-PAES. For example, if it is desirable to increase the hydrophilicity of the copolymer b-PAES, then the amount of sulfone recurring units (R_{b}) derived from the bio-based diol monomer can be increased relative to the other sulfone recurring unit (Rₐ) derived from the dihydroxy bisphenol monomer distinct from BPS and BPA

### Recurring units Rₐ

The recurring units (Rₐ) in copolymer b-PAES are of the formula (I), wherein:
- each R₁ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ; and
- j is zero or an integer of 1 to 4;
- each R₂ is at each location independently selected from H or an alkyl having from 1 to 5 carbon atoms, preferably an alkyl having from 1 to 5 carbon atoms at each location , more preferably methyl at each location
- each R₂* is at each location independently selected from an alkyl having from 1 to 5 carbon atoms, preferably methyl at each location, and
- R₃ is represented by a cycloalkyl having from 5 to 8 carbon atoms or -CR^{p}R^{q}-, wherein each of R^{p} and R^{q} is independently selected from H, an alkyl having from 1 to 10 carbon atoms, an aromatic mono- or polynuclear group, or a cycloalkyl having from 5 to 8 carbon atoms, said aromatic mono- or polynuclear group or cycloalkyl being optionally substituted by at least one alkyl having from 1 to 10 carbon atoms; R₃ preferably being selected from -CH₂-, -C(CH₃)₂-, 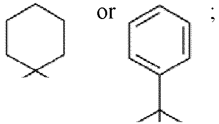 R₃ more preferably being selected from -CH₂- or -C(CH₃)₂-.

In preferred embodiments, the recurring units (Rₐ) are of formula (I*): 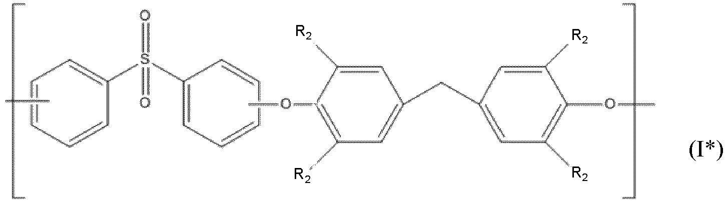 wherein each R₂ is at each location independently selected from an alkyl having from 1 to 5 carbon atoms, preferably a methyl group.

### Recurring units R_{b}

The recurring units (R_{b}) in copolymer b-PAES are of the formula (II), wherein:
- each R₄ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ; and
- i is zero or an integer of 1 to 4, and
- each of E, equal to or different from each other and at each occurrence, is selected from the group consisting of those of formulae (E'-I) to (E'-III):

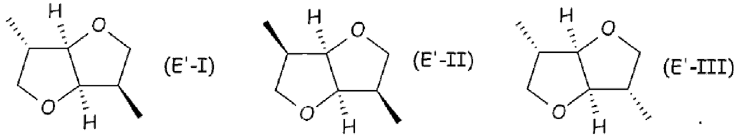

Preferably R₄ and i in Formula (II) are the same as R₁ and j in Formula (I).

In preferred embodiments, the recurring units (R_{b}) have at least one formula selected from the group consisting of formulae (R_{b}-1), (R_{b}-2), (R_{b}-3), and any combinations thereof: 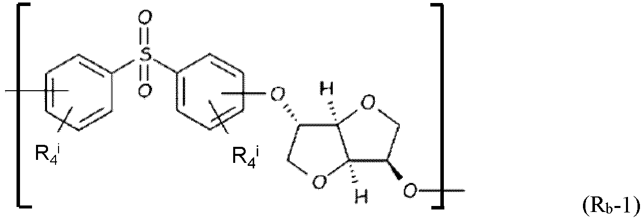 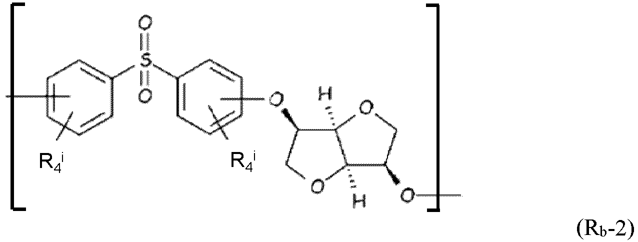 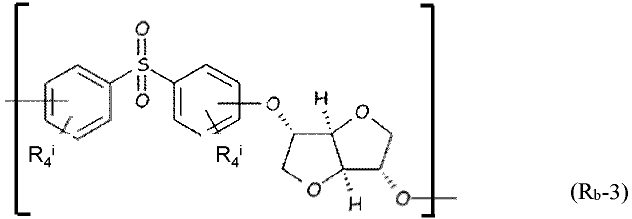 wherein R₄ and i have the same meaning as defined above in relation to Formula (II).

Preferably, R₄ and i in formulae (R_{b}-1), (R_{b}-2), (R_{b}-3) are the same as R₁ and j in Formula (I).

Preferably, i is equal to 0 in formulae (R_{b}-1), (R_{b}-2), and (R_{b}-3).

### Optional recurring units Rₛ

The copolymer b-PAES may comprise, in addition to recurring units (Rₐ) and (R_{b}), as detailed above, optional recurring units (R_{S}) comprising a Ar-SO₂-Ar' group, with Ar and Ar', equal to or different from each other, being aromatic groups, said recurring units (Rₛ) generally complying with formulae (S1) :

-Ar⁵-(T-Ar⁶)n-O-Ar⁷-SO₂-[Ar⁸-(T'-Ar⁹)ₙ-SO₂]ₘ-Ar¹⁰-O- (S1)

wherein :
- Ar⁵, Ar⁶, Ar⁷, Ar⁸, and Ar⁹, equal to or different from each other and at each occurrence, are independently an aromatic mono- or polynuclear group ;
- T and T', equal to or different from each other and at each occurrence, is independently a bond or a divalent group optionally comprising one or more than one heteroatom ; preferably T and T' are selected from the group consisting of a bond, -CH₂-, -C(O)-, -C(CH₃)₂-, -C(CF₃)₂-, -C(=CCl₂)-,
- C(CH₃)(CH₂CH₂COOH)-, -SO₂- and a group of formula : 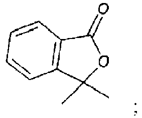 most preferably, T is a bond, -SO₂-, or -C(CH₃)₂- and T' is a bond;
- n and m, equal to or different from each other, are independently zero or an integer of 1 to 5.

Optional recurring units (R_{S}) can be notably selected from the group consisting of those of formulae (S-A) to (S-D) herein below: 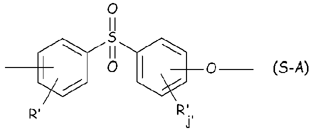 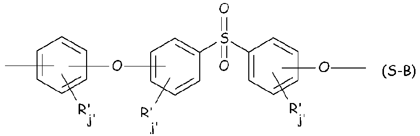 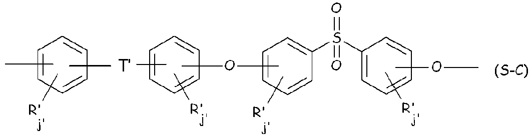 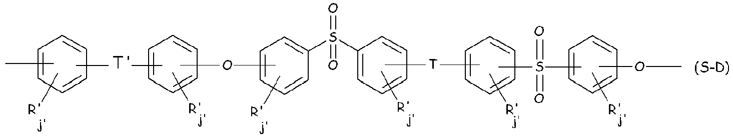 wherein :
- each of R' , equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j' is zero or is an integer from 0 to 4 ;
- T and T', equal to or different from each other are a bond or a divalent group optionally comprising one or more than one heteroatom ; preferably T and T' are selected from the group consisting of a bond, -CH₂-, -C(O)-, -C(CH₃)₂-, - C(CF₃)₂-, -C(=CCl₂)-, -C(CH₃)(CH₂CH₂COOH)-, -SO₂-, and a group of formula : 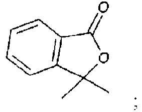 most preferably, T' is a bond, -SO₂-, or -C(CH₃)₂- and T is a bond.
In optional recurring unit (R_{S}), the respective phenylene moieties may independently have 1,2-, 1,4- or 1,3- linkages to the other moieties different from R in the recurring unit. Preferably, said phenylene moieties have 1,3- or 1,4- linkages, more preferably they have 1,4- linkage. Still, in recurring units (Rs), j' is at each occurrence zero, that is to say that the phenylene moieties have no other substituents than those enabling linkage in the main chain of the copolymer.

Recurring units (R_{S}) of formula (S-D) are preferably selected from the group consisting of the following recurring units: 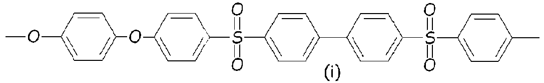 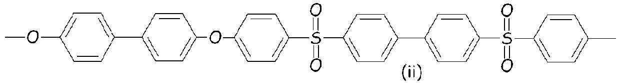 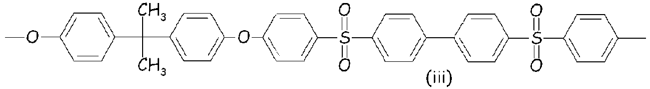 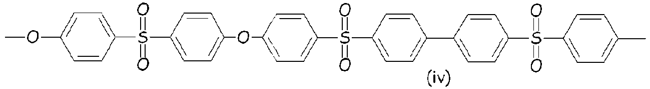 and mixtures thereof.

Optional recurring units (R_{S}) complying with formula (S-C), as above detailed, are preferably selected from the group consisting of the following units of formulae (j), (jj), (jjj) and (jv): 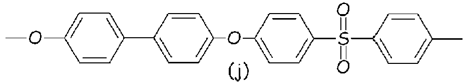 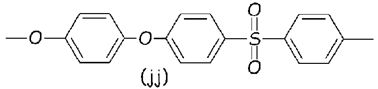 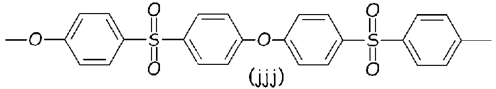 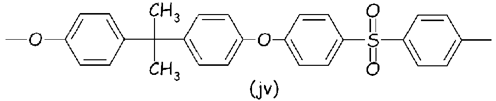 and mixtures thereof.

When recurring units different from units (Rₐ) and (R_{b}) are present in the copolymer b-PAES, the optional recurring units are generally selected from recurring units (R_{S}), as above below, so that the copolymer b-PAES consists essentially of recurring units (Rₐ) and (R_{b}), as above detailed, and, optionally, recurring units (R_{S}).

When at least one optional recurring unit (R_{S}) is present in the sulfone copolymer b-PAES, the sulfone copolymer b-PAES may comprise :
- less than 30 mol%, or not more than 20 mol%, or not more than 10 mol%, or from 0.1 mol% to 10 mol%, or from 0.1 mol% to 5 mol%, or from 0.1 mol% to 2 mol%, or from 0.1 mol% to 1 mol% of recurring unit (R_{S}) with respect to all the recurring units of copolymer b-PAES. This is particularly applicable when the optional recurring unit (Rs) is at least one unit selected from units of formulae (j), (jj), (jjj) and (jv). End chains, defects, and minor amounts (< 1 % moles, with respect to all the recurring units of copolymer b-PAES) of recurring units other than recurring units (Rₐ), (R_{b}) and optional recurring units (R_{S}) when present, without their presence substantially affecting the properties of the copolymer b-PAES.

It is generally understood that good results can be achieved using a copolymer b-PAES wherein substantially all recurring units are the recurring units (Rₐ) and (R_{b}).

The copolymer b-PAES has in general a weight averaged molecular weight (M_{w}) of:
- at least 50 kDa, or at least 60 kDa, or at least 70 kDa, and/or
- at most 200 kDa, or at most 180 kDa, or at most 170 kDa, or at most 150 kDa, or at most 140 kDa, or at most 120 kDa, or at most 115 kDa, or at most 100 kDa, or at most 90 kDa.

The weight average molecular weight (M_{w}) can be estimated by gel-permeation chromatography (GPC) using ASTM D5296 calibrated with polystyrene standards and performed using methylene chloride as a mobile phase.

In preferred embodiments, the bio-based sulfone copolymer b-PAES comprises:
a) recurring units (Rₐ) of the formula (I*), wherein each R₂ is at each location independently selected from an alkyl having from 1 to 5 carbon atoms, preferably a methyl group, and
b) recurring units (R_{b}) have at least one formula selected from the group consisting of the formulae (R_{b}-1), (R_{b}-2), (R_{b}-3), and any combinations thereof, wherein i is equal to 0 in formulae (R_{b}-1), (R_{b}-2), and (R_{b}-3).

In most preferred embodiments, the bio-based sulfone copolymer b-PAES is made from the polycondensation of tetramethyl bisphenol F (TMBPF), isosorbide and 4,4'-dichlorodiphenylsulfone (DCDPS).

### Process for manufacturing the copolymer b-PAES

The second aspect of the present invention relates to a process for manufacturing the copolymer b-PAES as described herein.

The manufacturing process comprises reacting in a reaction mixture (R_{G}) comprising a polar aprotic solvent and an alkali metal carbonate, a monomers mixture which contains at least 3 different monomers:
- at least one aromatic dihydroxy monomer [dihydroxy (AA) monomer, hereinafter],
- at least one 1,4:3,6-dianhydrohexitol monomer [diol (BB) monomer), hereinafter], and
- at least one aromatic dihalo sulfone monomer [dihalo (CC) monomer, hereinafter].

The copolymer b-PAES described in the present disclosure is obtained from the condensation of at least these three different monomers (AA), (BB) and (CC).

The copolymer b-PAES described in the present disclosure is preferably obtained from the condensation of only these three different monomers (AA), (BB) and (CC).

In preferred embodiments, the molar ratio between the overall amount of hydroxyl groups and overall amount of halo groups in the monomers mixture is from 0.95 to 1.05, preferably from 0.98 to 1.02, more preferably from 0.99 to 1.01, most preferably 1.0, so as to obtain the copolymer b-PAES.

According to the condensation reaction, the components (monomers, polar aprotic solvent, alkali metal carbonate) of the reaction mixture (R_{G}) are generally reacted concurrently. The reaction is preferably conducted in one stage. This means that the deprotonation of dihydroxy (AA) and diol (BB) monomers and the condensation reaction between the dihydroxy (AA) + diol (BB) monomers and the dihalo (CC) monomer takes place in a single reaction stage without isolation of the intermediate products.

In preferred embodiments, the reaction mixture (R_{G}) is substantially free of 4,4'-dihydroxydiphenyl sulfone (BPS), i.e., contains less than 0.1 wt.% of BPS.

In preferred embodiments, the reaction mixture (R_{G}) is substantially free of 4,4'-isopropylidenediphenol (BPA), i.e., contains less than 0.1 wt.% of BPA.

In some embodiments, the reaction mixture (R_{G}) is substantially free of 4,4'-dihydroxydiphenylmethane or bisphenol F (BPF), i.e., contains less than 0.1 wt.% of BPF.

In other embodiments, the reaction mixture (R_{G}) excludes bisphenols A, S, and F.
In alternate embodiments when the reaction mixture (R_{G}) includes at least one of bisphenols A, S, F as additional dihydroxy (A'A') monomer, the reaction mixture (R_{G}) contains not more than 10 mol%, or from 0.1 mol% to 10 mol%, or from 0.1 mol% to 5 mol%, or from 0.1 mol% to 2 mol%, or from 0.1 mol% to 1 mol%, of BPA, BPS or BPF based on the total amount of moles of dihydroxy (AA) monomer + diol (BB) monomer + such additional dihydroxy (A'A') monomer.

In preferred embodiments, the reaction mixture (R_{G}) is substantially free of 4,4'-biphenol, i.e., contains less than 0.1 wt.% of 4,4'-biphenol.

In alternate embodiments when the reaction mixture (R_{G}) includes 4,4'-biphenol as additional dihydroxy (A'A') monomer, the reaction mixture (R_{G}) contains not more than 10 mol%, or from 0.1 mol% to 10 mol%, or from 0.1 mol% to 5 mol%, or from 0.1 mol% to 2 mol%, or from 0.1 mol% to 1 mol%, of biphenol based on the total amount of moles of dihydroxy (AA) monomer + diol (BB) monomer + such additional dihydroxy (A'A') monomer.

### Aromatic Dihydroxy (AA) Monomer

The aromatic dihydroxy (AA) monomer may comprise at least one bisphenol derivative, preferably comprises a bisphenolic compound with at least one substituted-phenol group, preferably with both substituted-phenol groups. Preferably, each of the two phenol groups in this bisphenolic compound is substituted in at least one location by an alkyl having from 1 to 5 carbon atoms, preferably substituted in at least one location with a methyl group. More preferably, each of the two phenol groups in the bisphenolic compound is substituted at two locations by an alkyl having from 1 to 5 carbon atoms, preferably substituted at two locations with a methyl group. Preferably, at least two locations (but not more than 3) of each of the two phenol groups in this bisphenolic compound is unsubstituted, i.e., the substituted-phenol bisphenolic compound has H at 2 (preferred) or 3 (less preferred) locations on each of the two phenol groups.

The dihydroxy (AA) monomer preferably comprises at least a monomer of the formula (A), wherein
- each R₂ is at each location independently selected from H or an alkyl having from 1 to 5 carbon atoms, preferably an alkyl having from 1 to 5 carbon atoms, more preferably methyl at each location;
- each R₂* is at each location independently selected from an alkyl having from 1 to 5 carbon atoms, preferably methyl at each location, and
- R₃ is represented by a cycloalkyl having from 5 to 8 carbon atoms or - CR^{p}R^{q}-, wherein each of R^{p} and R^{q} is independently selected from H, an alkyl having from 1 to 10 carbon atoms, an aromatic mono- or polynuclear group, or a cycloalkyl having from 5 to 8 carbon atoms, said aromatic mono- or polynuclear group or cycloalkyl being optionally substituted by at least one alkyl having from 1 to 10 carbon atoms; R₃ preferably being selected from -CH₂-, -C(CH₃)₂- , 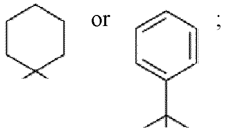 R₃ more preferably being selected from -CH₂- or -C(CH₃)₂-.

The dihydroxy (AA) monomer more preferably comprises at least a monomer of formula (A*): 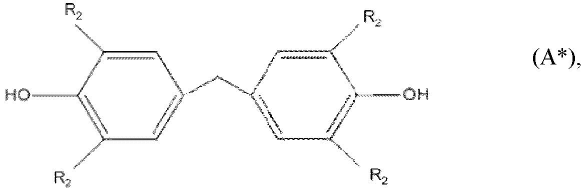 wherein each R₂ is at each location independently selected from an alkyl having from 1 to 5 carbon atoms, preferably methyl at each location.

According to an embodiment, the aromatic dihydroxy (AA) monomer comprises at least 50 mol.% of monomer of formula (A) or (A*), based on the total moles of aromatic dihydroxy (AA) monomer. For example at least 60 mol.%, or at least 70 mol.%, or at least 80 mol.%, or at least 90 mol.%, or at least 95 mol. %, or at least 99 mol. % of the aromatic dihydroxy (AA) monomer comprises monomer of formula (A) or (A*).

According to a preferred embodiment, the aromatic dihydroxy (AA) monomer consists essentially of monomer of formula (A) or (A*).

According to a most preferred embodiment, the aromatic dihydroxy (AA) monomer is tetramethyl bisphenol F (TMBPF).

### Bio-based diol (BB) Monomer

The bio-based diol (BB) monomer preferably comprises at least one diol selected from the group consisting of isosorbide (1), isomannide (2) and isoidide (3).

According to an embodiment, the diol (BB) monomer comprises at least 50 mol.% of at least one diol selected from the group consisting of isosorbide (1), isomannide (2) and isoidide (3), based on the total moles of diol (BB) monomer. For example at least 60 mol.%, or at least 70 mol.%, or at least 80 mol.%, or at least 90 mol.%, or at least 95 mol. %, or at least 99 mol. % of the diol (BB) monomer comprises at least one diol selected from the group consisting of isosorbide (1), isomannide (2) and isoidide (3).

According to a preferred embodiment, the diol (BB) monomer consists essentially of at least one diol selected from the group consisting of isosorbide (1), isomannide (2) and isoidide (3).

According to a more preferred embodiment, the diol (BB) monomer consists essentially of isosorbide (1) and optionally isomannide (2) and/or isoidide (3).

According to a most preferred embodiment, the diol (BB) monomer is isosorbide (1).

### Dihalo (CC) Sulfone Monomer

The aromatic dihalo (CC) sulfone monomer preferably comprises a dihalo of the formula (C) provided earlier, wherein :
- each of R₁, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j is zero or is an integer from 0 to 4, preferably j=0 ; and
- X and X', equal to or different from each other, are independently a halogen atom, preferably Cl or F, more preferably Cl.

According to an embodiment, the aromatic dihalo (CC) sulfone monomer comprises at least 50 mol.% of a 4,4-dihalosulfone comprising at least one of a 4,4'-dichlorodiphenyl sulfone (DCDPS) or 4,4' difluorodiphenyl sulfone (DFDPS), preferably DCDPS. For example at least 60 mol.%, or at least 70 mol.%, or at least 80 mol.%, or at least 90 mol.%, or at least 95 mol. %, or at least 99 mol. % of the aromatic dihalo (CC) sulfone monomer comprises 4,4-dihalosulfone.

According to an embodiment, the aromatic dihalo (CC) sulfone monomer comprises at least 50 mol.% of 4,4'-dichlorodiphenyl sulfone (DCDPS), based on the total moles of aromatic dihalo (CC) sulfone monomer. For example at least 60 mol.%, or at least 70 mol.%, or at least 80 mol.%, or at least 90 mol.%, or at least 95 mol. %, or at least 99 mol. % of the aromatic dihalo (CC) sulfone monomer comprises DCDPS.

According to a preferred embodiment, the aromatic dihalo (CC) sulfone monomer consists essentially of DCDPS.

In preferred embodiments, the molar ratio of the overall amounts of aromatic dihydroxy (AA) monomer + bio-based diol (BB) monomer over the overall amount of aromatic dihalo (CC) sulfone monomer in the monomers mixture is :
- at least 0.95 to 1.05, or least 0.98, or at least 0.99 and/or
- at most 1.05, or at most 1.02, or at most 1.01.

In more preferred embodiments, the molar ratio of the overall amounts of aromatic dihydroxy (AA) monomer + bio-based diol (BB) monomer over the overall amount of aromatic dihalo (CC) sulfone monomer in the monomers mixture is 1.0.

According to more preferred embodiments when the aromatic dihydroxy (AA) monomer consists essentially of monomer of formula (A); the diol (BB) monomer consists essentially of at least one diol selected from the group consisting of isosorbide (1), isomannide (2) and isoidide (3); and the aromatic dihalo (CC) sulfone monomer consists essentially of DCDPS, the molar ratio of the overall amounts of monomer of formula (A) + at least one diol selected from the group consisting of isosorbide (1), isomannide (2) and isoidide (3) over the overall amount of DCDPS in the monomers mixture is:
- at least 0.95 to 1.05, or least 0.98, or at least 0.99 and/or
- at most 1.05, or at most 1.02, or at most 1.01.

According to yet more preferred embodiments, the molar ratio of the overall amounts of monomer of formula (A) + at least one diol selected from the group consisting of isosorbide (1), isomannide (2) and isoidide (3) over the overall amount of DCDPS in the monomers mixture is 1.0.

In more preferred embodiments, the process for manufacturing the copolymer b-PAES comprises reacting in a reaction mixture (R_{G}) comprising a polar aprotic solvent and in the presence of an alkali metal carbonate, a monomers mixture comprising least three different monomers:
- at least one aromatic dihydroxy monomer [dihydroxy (AA)], comprising at least a monomer of the formula (A*),
wherein each R₂ is at each location independently selected from an alkyl having from 1 to 5 carbon atoms, preferably methyl at each location;
- at least isosorbide of formula (1) as diol (BB),
- at least 4,4'-dichlorodiphenyl sulfone (DCDPS) as dihalo (CC),
wherein the molar ratio between the overall amount of hydroxyl groups and overall amount of halo groups in the monomers mixture is from 0.95 to 1.05, preferably from 0.98 to 1.02, more preferably from 0.99 to 1.01, most preferably 1.0, so as to obtain the copolymer b-PAES.

In most preferred embodiments, the process for manufacturing the copolymer b-PAES comprises reacting in a reaction mixture (R_{G}) comprising a polar aprotic solvent and in the presence of an alkali metal carbonate, a monomers mixture comprising (or consisting essentially of) three different monomers:
- tetramethyl bisphenol F (TMBPF) as the aromatic dihydroxy (AA) monomer
- isosorbide as the diol (BB) monomer, and
- 4,4'-dichlorodiphenylsulfone (DCDPS) as the dihalo (CC) monomer.

### Polar Aprotic Solvent

The polar aprotic solvent used in the reaction mixture to make the copolymer b-PAES described herein may be selected from the group consisting of 1,3-dimethyl-2-imidazolidinone (DMI), dimethylsulfoxide (DMSO), dimethylsulfone (DMSO2), diphenylsulfone, diethylsulfoxide, diethylsulfone, diisopropylsulfone, tetrahydrothiophene-1, 1-dioxide (commonly called tetramethylene sulfone or sulfolane), N-Methyl-2-pyrrolidone (NMP), N-butylpyrrolidinone (NBP), N-ethylpyrrolidone (NEP), N,N'-dimethylacetamide (DMAc), N,N'-dimethylpropyleneurea (DMPU), dimethylformamide (DMF), tetrahydrothiophene-1-monoxide, and mixtures thereof; preferably selected from the group consisting of 1,3-dimethyl-2-imidazolidinone (DMI), N-Methyl-2-pyrrolidone (NMP), dimethylsulfoxide (DMSO), dimethylsulfone (DMSO2), N-butylpyrrolidinone (NBP), N-Ethylpyrrolidone (NEP), N,N'-dimethylacetamide (DMAc), N,N'-dimethylpropyleneurea (DMPU), dimethylformamide (DMF), and/or sulfolane.

### Alkali metal carbonate

The condensation process described herein may be carried out in the presence of a carbonate component which is selected in the group of alkali metal hydrogencarbonates, for example sodium hydrogencarbonate (NaHCO₃) and potassium hydrogencarbonate (KHCO₃), or in the group of alkali metal carbonate, for example rubidium carbonate, cesium carbonate, potassium carbonate (K₂CO₃) and/or sodium carbonate (Na₂CO₃).

Preferably the process of the present invention is carried out in the presence of potassium carbonate (K₂CO₃), sodium carbonate (Na₂CO₃) or a combination thereof.

According to an embodiment, the process of the present invention is carried out in the presence of a low particle size alkali metal carbonate, for example comprising anhydrous K₂CO₃, having a volume-averaged particle size of less than about 100 µm, for example less than 45 µm, less than 30 µm or less than 20 µm. According to a preferred embodiment, the process of the present invention is carried out in in the presence of a carbonate component comprising not less than 50 wt. % of K₂CO₃ having a volume-averaged particle size of less than about 100 µm, for example less than 45 µm, less than 30 µm or less than 20 µm, based on the overall weight of the base component in reaction mixture. The volume-averaged particle size of the carbonate used can for example be determined with a Mastersizer 2000 from Malvern on a suspension of the particles in chlorobenzene/sulfolane (60/40).

The amount of the alkali metal carbonate used, when expressed by the ratio of the equivalents of alkali metal (M) per equivalent of hydroxyl group (OH) [eq. (M)/eq. (OH)] is :
- at least 1, or at least 1.05, or at least 1.1, or at least 1.15, or at least 1.2, or at least 1.25, or at least 1.3 ; and/or
- at most 4, or at most 3.5, or at most 3, or at most 2.5, or at most 2.

### Optional co-solvent forming azeotrope with water

According to an embodiment of the manufacturing process, the reaction mixture (R_{G}) to carry out the condensation may further comprise, in addition to the polar aprotic solvent, a co-solvent which forms an azeotrope with water.

The co-solvent which forms an azeotrope with water includes aromatic hydrocarbons such as benzene, toluene, xylene, ethylbenzene, chlorobenzene and the like. The co-solvent preferably comprises or consists of toluene or chlorobenzene. The azeotrope forming co-solvent and the polar aprotic solvent are used typically in a weight ratio of from about 1:10 to about 1: 1, preferably from about 1:5 to about 1:1 in the reaction mixture (R_{G}).

Water is continuously removed from the reaction mixture as an azeotrope with the azeotrope forming co-solvent so that substantially anhydrous conditions are maintained during the polymerization. The azeotrope-forming co-solvent, for example, chlorobenzene, is removed from the reaction mixture, typically by distillation, after the water formed in the reaction is removed leaving the copolymer b-PAES dissolved in the polar aprotic solvent.

Preferably, the reaction mixture (R_{G}) does not comprise any substance which forms an azeotrope with water.

### Polycondensation reaction conditions

In some embodiments, the process to manufacture the copolymer b-PAES is such that the reaction conversion at least 95%.

The temperature of the reaction mixture (R_{G}) is kept at about 150°C to about 350°C, preferably from about 200°C to about 300°C, more preferably from about 200°C to about 230°C, yet more preferably from about 200°C to about 220°C, for about one to 15 hours, preferably from about 3 to about 9 hours.

The monomers in the reaction mixture (R_{G}) are polycondensed, within the temperature range, until the requisite degree of condensation is reached.

The polycondensation time can vary from 0.1 to 15 hours, preferably from 1 to 15 or from 3 to 9 hours or from 4 to 7 hours, depending on the nature of the starting monomers and on the selected reaction conditions.

The inorganic constituents, for example sodium chloride or potassium chloride or excess of base, can be removed, before or after isolation of the copolymer b-PAES, by suitable methods such as dissolving and filtering, screening or extracting.

According to an embodiment, the reacting (condensation) is preferably carried out so as to obtain, at the end of the reaction, a total wt% polymer concentration [total weight % polymer, hereinafter] with respect to the total weight of the reaction mixture:
- of at least 10 wt%, or at least 20 wt%, or at least 25 wt% polymer, or at least 30 wt% polymer,
   and/or
- of at most 60 wt%, or at most 50 wt%.

According to preferred embodiments, the amount of copolymer b-PAES at the end of the reaction (condensation) is at least 30 wt.% and at most 50 wt% based on the total weight of the copolymer b-PAES + the polar aprotic solvent.

At the end of the reaction, the copolymer b-PAES is separated from the other components (salts, base, ...) to obtain a copolymer b-PAES solution. Filtration can for example be used to separate the copolymer b-PAES from the other components. The copolymer b-PAES solution can then be used as such for step (b) or alternatively, the copolymer b-PAES can be recovered from the solvent, for example by coagulation or devolatilization of the solvent.

### Use of the copolymer b-PAES

Another aspect of the present invention provides the use of the copolymer b-PAES for the manufacture of articles such as membranes, coatings, films, fibers and sheets, and three-dimensional injected or molded or printed parts.

Another aspect of the present invention provides a method for manufacture of articles such as membranes, coatings, films, fibers and sheets, and three-dimensional injected or molded or printed parts, said method comprising using the copolymer b-PAES.

The printed parts may be made via additive manufacturing or 3D printing.

### Article manufactured from the copolymer b-PAES

Another aspect of the present invention provides a shaped article comprising the copolymer b-PAES according to the present invention.

Shaped articles manufactured from the copolymer b-PAES may be selected from the group consisting of membranes; melt processed films, monofilaments and fibers; solution processed films (porous and non-porous films, including solution casted membranes, and membranes from solution spinning); solution processed monofilaments; melt process monofilaments and fibers; hollow fibers and solid fibers; coatings; printed objects, and injection and compression molded objects.

Shaped articles manufactured from the copolymer b-PAES preferably may be a membrane, or a part thereof, preferably being selected from membranes for bioprocessing and medical filtrations (such as hemodialysis membranes), membranes for food and beverage processing, membranes for water purification, membranes for waste water treatment and membranes for industrial process separations involving aqueous media.

Among membranes, the copolymer b-PAES according to the present invention is particularly suitable for manufacturing membranes intended for contact with aqueous media, including a biological fluid such as body fluid, particularly blood.

From an architectural perspective, membranes manufactured from the copolymer b-PAES as above detailed may be provided under the form of flat structures (e.g. films or sheets), corrugated structures (such as corrugated sheets), tubular structures, or hollow fibers; as per the pore size is concerned, full range of membranes (non-porous and porous, including for microfiltration, ultrafiltration, nanofiltration, and reverse osmosis) can be advantageously manufactured from the copolymer b-PAES; pore distribution can be isotropic or anisotropic.

Shaped articles manufactured from the copolymer b-PAES according to the present invention, can be, as above mentioned, under the form of films and sheets. These shaped articles are particularly useful as specialized optical films or sheets, and/or suitable for packaging.

Further, shaped articles manufactured from the copolymer b-PAES according to the present invention, can be three-dimensional molded parts, in particular transparent or coloured parts.

Among applications of use wherein such injection molded parts can be used, mention can be made of healthcare applications, in particular medical and dental applications, wherein shaped articles made from the copolymer b-PAES, according to the present invention, can advantageously be used for replacing metal, glass and other traditional materials in single-use and reusable instruments and devices.

The shaped article made from at least the copolymer b-PAES is preferably BPA and BPS free.

In additional or alternate embodiments, the shaped article made from at least the copolymer b-PAES is BPF free.

### Membrane (as article)

A membrane made from the copolymer b-PAES may be used for purifying water or a biological fluid, preferably blood.

The membrane made from at least the copolymer b-PAES preferably is free of BPS and BPA (i.e., contains less than 0.1 wt.% of BPS and less than 0.1 wt.% of BPA).

In additional or alternate embodiments, the membrane preferably made from at least the copolymer b-PAES is BPF free (i.e., contains less than 0.1 wt.% of bisphenol F).

The term "membrane" is used herein in its usual meaning, that is to say it refers to a discrete, generally thin, interface that moderates the permeation of chemical species in contact with it. This interface may be molecularly homogeneous, that is, completely uniform in structure (dense membrane), or it may be chemically or physically heterogeneous, for example containing voids, holes or pores of finite dimensions (porous membrane).

According to the present invention, a membrane is typically a microporous membrane which can be characterized by its average pore diameter and porosity, i.e., the fraction of the total membrane that is porous.

The membrane of the present invention may have a gravimetric porosity (%) of 20 to 90 % and comprises pores, wherein at least 90 % by volume of the said pores has an average pore diameter of less than 5 µm. Gravimetric porosity of the membrane is defined as the volume of the pores divided by the total volume of the membrane.

Membranes having a uniform structure throughout their thickness are generally known as symmetrical membranes; membranes having pores which are not homogeneously distributed throughout their thickness are generally known as asymmetric membranes. Asymmetric membranes are characterized by a thin selective layer (0.1-1 µm thick) and a highly porous thick layer (100-200 µm thick) which acts as a support and has little effect on the separation characteristics of the membrane.

Membranes can be in the form of one or more flat sheets or in the form of tubes.

Tubular membranes are classified based on their dimensions in tubular membranes having a diameter greater than 3 mm; capillary membranes, having a diameter comprised between 0.5 mm and 3 mm; and hollow fibers having a diameter of less than 0.5 mm. Capillary membranes are otherwise referred to as hollow fibers.

Hollow fibers are particularly advantageous in applications where compact modules with high surface areas are required.

The membranes according to the present invention can be manufactured using any of the conventionally known membrane preparation methods, for example, by a solution casting or solution spinning method.

Preferably, the membranes according to the present invention are prepared by a phase inversion method occurring in the liquid phase, said method comprising the following steps:
(i) preparing a PAES polymer solution comprising the copolymer b-PAES described herein and a polar solvent,
(ii) processing said solution into a film;
(iii) contacting said film with a non-solvent bath.

The membrane of the present invention may comprise the copolymer b-PAES described herein in an amount of at least 1 wt. %, for example at least 5 wt. %, at least 10 wt. %, at least 15 wt. %, at least 20 wt. %, at least 25 wt. %, or at least 30 wt. %, based on the total weight of the membrane.

The membrane of the present invention may comprise the copolymer b-PAES described herein in an amount of more than 50 wt. %, for example more than 55 wt. %, more than 60 wt. %, more than 65 wt. %, more than 70 wt. %, more than 75 wt. %, more than 80 wt. %, more than 85 wt. %, more than 90 wt. %, more than 95 wt. % or more than 99 wt. %, based on the total weight of the membrane.

According to an embodiment, the membrane of the present invention may comprise the copolymer b-PAES described herein in an amount ranging from 1 to 99 wt. %, for example from 3 to 96 wt. %, from 6 to 92 wt. % or from 12 to 88 wt. %, based on the total weight of the membrane.

The membrane of the present invention may further comprise at least one polymer distinct form the copolymer b-PAES described herein, for example another sulfone polymer, e.g., polysulfone (PSU), polyethersulfone (PES), poly(biphenyl ether sulfone) (PPSU), or a polyphenylene sulfide (PPS), a poly(aryl ether ketone) (PAEK), e.g., a poly(ether ether ketone) (PEEK), a poly(ether ketone ketone) (PEKK), a poly(ether ketone) (PEK) or a copolymer of PEEK and poly(diphenyl ether ketone) (PEEK-PEDEK copolymer), polyetherimide (PEI), and/or polycarbonate (PC). The other polymeric ingredient can also be polyvinylpyrrolidone and/or polyethylene glycol.

The membrane may also further comprise at least one non-polymeric ingredient such as a solvent, a filler, a lubricant, a mold release, an antistatic agent, a flame retardant, an anti-fogging agent, a matting agent, a pigment, a dye and/or an optical brightener.

A suitable example of a method for forming a membrane from a polyaryl ether sulfone polymer is described in US2019/054429A1 (Solvay Specialty Polymers USA).

### Polymer solution (SP) for preparing a membrane

An aspect of the present invention is directed to a polymer solution (SP) for preparing a membrane, which comprises the copolymer b-PAES in a polar organic solvent [solvent (S_{SP})].

The overall concentration of the copolymer b-PAES in the polymer solution (SP) is preferably at least 8 wt.%, more preferably at least 12 wt.%, based on the total weight of the polymer solution. Typically, the concentration of the copolymer b-PAES in the polymer solution does not exceed 50 wt.%; preferably, it does not exceed 40 wt.%; more preferably, it does not exceed 30 wt.%, based on the total weight of the polymer solution (SP).

Concentrations of the copolymer b-PAES ranging between 15 and 25 wt.%, and more preferably between 16 and 22 % wt, with respect to the total weight of polymer solution (SP) have been found particularly advantageous.

The polymer solution (SP) may further comprise at least one additional polymer distinct form the copolymer b-PAES described herein, for example another sulfone polymer, e.g., polysulfone (PSU), polyethersulfone (PES), poly(biphynyl ether sulfone) (PPSU), or a polyphenylene sulfide (PPS), a poly(aryl ether ketone) (PAEK), e.g., a poly(ether ether ketone) (PEEK), a poly(ether ketone ketone) (PEKK), a poly(ether ketone) (PEK) or a copolymer of PEEK and poly(diphenyl ether ketone) (PEEK-PEDEK copolymer), a polyetherimide (PEI), and/or a polycarbonate (PC). The other polymeric ingredient can also include or be polyvinylpyrrolidone and/or polyethylene glycol.

In such instances, the concentration of the at least one additional polymer and the copolymer b-PAES in the polymer solution (SP) does not exceed 50 wt.%; preferably, it does not exceed 40 wt.%; more preferably, it does not exceed 30 wt.%, based on the total weight of the polymer solution (SP).

The overall concentration of the solvent (S_{SP}) in the polymer solution (SP) may be at least 20 wt.%, preferably at least 30 wt.%, based on the total weight of the polymer solution. Typically the concentration of the solvent (S_{SP}) in the polymer solution (SP) does not exceed 70 wt.%; preferably, it does not exceed 65 wt.%; more preferably, it does not exceed 60 wt.%, based on the total weight of the polymer solution.

The solvent (S_{SP}) may be selected from a group consisting of 1,3-dimethyl-2-imidazolidinone (DMI), dimethylsulfoxide (DMSO), dimethylsulfone (DMSO2), diphenylsulfone, diethylsulfoxide, diethylsulfone, diisopropylsulfone, tetrahydrothiophene-1, 1-dioxide (commonly called tetramethylene sulfone or sulfolane), N-Methyl-2-pyrrolidone (NMP), N-butylpyrrolidinone (NBP), N-ethylpyrrolidone (NEP), N,N'-dimethylacetamide (DMAc), N,N'-dimethylpropyleneurea (DMPU), dimethylformamide (DMF), tetrahydrothiophene-1-monoxide, and mixtures thereof.

Exemplary solvents (S_{SP}) which may be used, alone or in combination, in the polymer solution (SP) are described in patent applications in US2019054429A1 (Solvay Specialty Polymers Italy), in particular solvents described in paragraphs [0057]-[0129], and WO 2019/048652 (Solvay Specialty Polymers USA).

The polymer solution (SP) may contain additional components, such as nucleating agents, fillers and the like.

The polymer solution (SP) may also contain pore forming agents, notably polyvinylpyrrolidone (PVP), and polyethyleneglycol (PEG) having a molecular weight of at least 200.

### Purification method for a biological fluid

A further aspect of the present invention may be directed to a purification method comprises at least a filtration step through the membrane described herein.

Preferably, the purification method is for purifying a human biological fluid, preferably a blood product, such as whole blood, plasma, fractionated blood components or mixtures thereof, that are carried out in an extracorporeal circuit. The extracorporeal circuit for carrying out a method comprises at least one filtering device (or filter) comprising at least one membrane as described above.

As intended herein, a blood purification method through an extracorporeal circuit comprises hemodialysis (FD) by diffusion, hemofiltration (HF), hemodyafiltration (HDF) and hemoconcentration. In HF, blood is filtered by ultrafiltration, while in HDF blood is filtered by a combination of FD and HF.

Blood purification methods through an extracorporeal circuit are typically carried out by means of a hemodialyzer, i.e. equipment designed to implement any one of FD, HF or HFD. In such methods, blood is filtered from waste solutes and fluids, like urea, potassium, creatinine and uric acid, thereby providing waste solutes- and fluids-free blood.

Typically, a hemodialyzer for carrying out a blood purification method comprises a cylindrical bundle of hollow fibers of membranes, said bundle having two ends, each of them being anchored into a so-called potting compound, which is usually a polymeric material acting as a glue which keeps the bundle ends together. Potting compounds are known in the art and include notably polyurethanes. By applying a pressure gradient, blood is pumped through the bundle of membranes via the blood ports and the filtration product (the "dialysate") is pumped through the space surrounding the filers.

### EXAMPLES

The invention will be now described in more details with reference to the following examples, whose purpose is merely illustrative and not intended to limit the scope of the invention.

**Table 1 - Sources of reaction (condensation) components**

| **Chemicals** | **Sources** |
|---|---|
| tetramethylbisphenol F (TMBPF) | TCI America |
| Isosorbide (ISO) | Roquette |
| 4,4'-dichlorodiphenyl sulfone (DCDPS) | Solvay Specialty Polymers USA |
| potassium carbonate | Aldrich |
| sulfolane | Aldrich |
| dimethylsulfoxide (DMSOc) | Aldrich |

### General description of the preparation of the copolymer b-PAES

To a 1-liter resin flask (reactor) equipped with an overhead mechanical agitator, a nitrogen dip-tube, dean-stark trap with reflux condenser are charged tetramethylbisphenol F (TMBPF) as dihydroxy (AA) monomer, isosorbide as diol (BB) monomer, 4,4'-dichlorodiphenyl sulfone (DCDPS) as dihalo (CC) sulfone monomer, and potassium carbonate followed by the polar aprotic solvent (e.g., sulfolane or dimethylsulfoxide (DMSO2)) to form the monomers mixture.

The amounts of the monomers are selected so as to achieve a weight % polymer of from 30 to 50 wt% polymer in the reaction mixture.

The amount of potassium carbonate used in the monomers mixture, when expressed by the ratio of the equivalents of alkali metal (M) per equivalent of hydroxyl group (OH) [eq. (M)/eq. (OH)] is generally from 1.2 to 2 eq. (K)/eq. (OH).

The molar ratio in the monomers mixture between the overall amount of hydroxyl groups from TMBPF and isosorbide [(AA) + (BB) monomers ] and the overall amount of halo groups from DCDPS monomer [ (CC) monomer) ] is about 1.0.

Before starting heat via external oil bath with a target internal reaction temperature (generally from 200 to 220 °C), nitrogen flow is established and the mixture is purged with nitrogen for 15 minutes. The reaction mixture comprising the monomers is stirred with the overhead mechanical agitator and warmed to initiate reaction using an oil bath controlled at the target internal reaction temperature. The bath temperature increased from 21°C to the appropriate reaction temperature over about 30-60 minutes. Water, a byproduct of the polymerization reaction, is continuously stripped out of the reactor and collected in the dean-stark trap. Upon reaching the target internal temperature, the reaction is held at that temperature for a period of reaction time suitable until a desired M_{w} is achieved. The reaction time period may vary from 3 to 15 hours, and is generally from about 3 to 9 hours.

Once the desired molecular weight is achieved, the polymerization is terminated by bubbling gaseous methyl chloride through the reaction mixture at a rate of 1 g/min over 30 - 60 minutes. Because the mixture becomes viscous and difficult to stir at the end of the reaction, the reaction mixture is diluted with NMP to obtain 10% by weight in polymer and cooled to <100°C. The dilute polymer solution is filtered through a 2.7µm glass fiber filter pad under pressure to remove salts. The polymer solution is poured in to a Waring blender containing a non-solvent (methanol or 50/50 vol./vol. methanol/acetone) and precipitate, using a ratio of 1:5 polymer solution to non-solvent to obtain a white solid. The isolated white solid is then washed with the same non-solvent 6 times with filtration between each wash, then vacuum filtered, and dried for 12 h in a vacuum oven at 120°C. The molecular weight M_{w} was measured by GPC.

### Determination of molecular weight

Size Exclusion Chromatography (SEC) was performed using Methylene Chloride as a mobile phase. Two 5µm mixed D Size Exclusion Chromatography (SEC) columns with guard column from Agilent Technologies was used for separation. An ultraviolet detector of 254nm is used to obtain the chromatogram. A flow rate of 1.5 ml/min and injection volume of 20 µL of a 0.2% w/v solution in mobile phase was selected. Calibration was performed using 10 narrow calibration standards of Polystyrene obtained from Agilent Technologies (Peak molecular weight range: 371000 to 580).

Calibration Curve:
1) Type: Relative, Narrow calibration standard calibration
2) Fit: 3rd order regression.
Integration and calculation: Empower Pro GPC software manufactured by Waters used to acquire data, calibration and molecular weight calculation. Peak integration start and end points are manually determined from significant difference on global baseline.

### Examples 1-4 :90 mol% TMBPF & 10 mol% isosorbide using sulfolane as solvent

The (b-PAES) of Example 1 was made according to the general procedure described above. The initial reaction mixture comprised:
- 103.822g (0.405 mol) of tetramethylbisphenol F as dihydroxy (AA),
- 6.576g (0.045mol) of isosorbide "ISO" as diol (BB),
- 129.223 g (0.45 mol) of DCDPS as dihalo (CC),
- 93.288 g (0.675 mol) of anhydrous K₂CO₃ as alkali metal carbonate,
- 482.538 g sulfolane as solvent.

The molar ratio of [ dihydroxy (AA) + diol (BB) ]/ dihalo (CC) was 1.

The molar % isosorbide based on the total number of moles of isosorbide +TMBPF was 10 mol%. The molar ratio eq. (K)/eq. (OH) was 1.5.The wt% polymer in the reaction mixture was 30 wt%. The targeted reaction temperature was 215 °C. The reaction time was 5.75 hours.

Three other (b-PAES) of Examples 2-4 were made according to the same procedure as described in Example 1 with the molar ratio of [ dihydroxy (AA) + diol (BB) ]/ dihalo (CC) = 1 and a 30wt% polymer in the reaction mixture, except that
- the molar ratio eq. (K)/eq. (OH) varied from 1.2 to 1.5;
- -the targeted reaction temperature was 200 °C and
- the reaction time was from 7.8 to 9 hours.
The reaction conditions and the molecular weight M_{w} measured by GPC are shown in Table 2.

### Examples 5-11:75 mol% TMBPF & 25 mol% isosorbide using sulfolane as solvent

Three copolymers (b-PAES) of Examples 5-11 were made according to the same procedure as described in Example 1 with the molar ratio of [dihydroxy (AA) + diol (BB) ]/ dihalo (CC) = 1 except that:
- the molar % isosorbide based on the total number of moles of isosorbide +TMBPF was 25 mol%;
- the wt% polymer in the reaction mixture was 40, 45 or 50 wt%,
- the molar ratio eq. (K)/eq. (OH) varied from 1.5 to 2;
- the targeted reaction temperature was 215 or 220 °C; and
- the reaction time was from 3 to 6.5 hours.

The reaction conditions and the molecular weight measured by GPC are shown in Table 2.

**Table 2**

| **Ex.** | mol% ISO | wt% polymer | Eq. K/ Eq. OH | Reaction Temp. (°C) | Reaction time (hr:min) | **M_{w} (kDa)** |
|---|---|---|---|---|---|---|
| **1** | 10% | 30% | 1.5 | 215 | 5:45 | **85** |
| **2** | 10% | 30% | 1.2 | 200 | 9:00 | **112** |
| **3** | 10% | 30% | 1.3 | 200 | 8:17 | **78** |
| **4** | 10% | 30% | 1.5 | 200 | 7:49 | **84** |
| **5** | 25% | 40% | 2.0 | 215 | 5:06 | **62** |
| **6** | 25% | 40% | 2.0 | 220 | 4:25 | **69** |
| **7** | 25% | 50% | 2.0 | 220 | 3:11 | **59** |
| **8** | 25% | 40% | 1.75 | 220 | 6:31 | **72** |
| **9** | 25% | 45% | 1.75 | 220 | 6:09 | **80** |
| **10** | 25% | 45% | 1.5 | 220 | 6:07 | **72** |
| **11** | 25% | 45% | 1.75 | 220 | 5:09 | **138** |
| **12** | 25% | 45% | 1.75 | 220 | 7:03 | **89** |

### Example 12: 75 mol% TMBPF & 25 mol% isosorbide using sulfolane as solvent

The copolymer b-PAES of Example 12 was made according to the general procedure described above except that because the reaction mixture became quite viscous, the reaction mixture was diluted with 60.86g sulfolane during reaction, and the viscosity was allowed to further increase. A sample of the reaction mixture was collected after about 5 hours at reaction temperature for M_{w} determination and the reaction was terminated without work-up.

The initial reaction mixture comprised:
- 86.518g (0.338 mol) of tetramethylbisphenol F as dihydroxy (AA),
- 16.441g (0. 1 13mol) of isosorbide "ISO" as diol (BB),
- 129.223 g (0.450 mol) of DCDPS as dihalo (CC),
- 108.870 g (0.788 mol) of anhydrous K₂CO₃ as alkali metal carbonate,
- 482.538 g sulfolane sulfolane as solvent.
The molar ratio of [dihydroxy (AA) + diol (BB) ]/ dihalo (CC) was 1. The molar ratio eq. (K)/eq. (OH) was 1.75. The wt% polymer in the reaction mixture was 45 wt%. The targeted reaction temperature was 220 °C.

The reaction conditions and the molecular weight M_{w} measured by GPC are shown in Table 2.

### Example 13: 75 mol% TMBPF & 25 mol% isosorbide using DMSO2 as solvent

The copolymer b-PAES of Example 13 was made according to the procedure described for Example 11 except that dimethyl sulfone was used as solvent and a sample of the reaction mixture (without solvent dilution) was collected after about 3 hours at temperature for Mw determination and the reaction was terminated without work-up.

The initial reaction mixture comprised:
- 86.518g (0.338 mol) of tetramethylbisphenol F as dihydroxy (AA),
- 16.441g (0.1 13mol) of isosorbide (ISO) as diol (BB),
- 129.223 g (0.450 mol) of DCDPS as dihalo (CC),
- 77.74 g (0.563 mol) of anhydrous K₂CO₃ as alkali metal carbonate,
- 243.667 g of Dimethylsulfone (DMSO2) as solvent.
The molecular weight M_{w} measured by GPC was 79kDa.

### Comparative Example 14: 100 mol% TMBPF using sulfolane as solvent

For comparative purposes, a TMBPF homopolymer was prepared using the following method. To a 1-L resin flask equipped with an overhead agitator, a nitrogen dip-tube, dean-stark trap with reflux condenser was charged 115.358g (0.450 mol) of Tetramethylbisphenol F, 129.223 g (0.450 mol) of DCPDS, 65.302 g (0.473 mol) of K₂CO₃ and 494.11 g sulfolane. Agitation and nitrogen flow were established and the reaction mixture was purged with nitrogen for 15 minutes before starting heat via external oil bath with a target internal temperature of 200 °C. Water, a byproduct of the polymerization reaction, was continuously stripped out of the reactor and collected in the dean-stark trap. Upon reaching 200 °C, the reaction was held at that temperature until the desired Mw was achieved. Once desired molecular weight was achieved the polymerization was terminated by bubbling gaseous methylchloride through the reaction mixture at a rate of 1 g/min over 30 - 60 minutes. The reaction mixture was diluted with 317.64 g of sulfolane. The dilute polymer solution was filtered through a 2.7µm glass fiber filter pad under pressure to remove salts. The polymer solution was precipitated in methanol or methanol/acetone (1:1) a ratio of 1:5 polymer solution to non-solvent to afford a white solid. The isolated white solid was then washed with the same non-solvent 6 times, vacuum filtered, and dried for 12 h in a vacuum oven at 100°C.

The molecular weight M_{w} measured by GPC was 78kDa.

### Example 15 - Preparation of Dense Polymer Films Sample & Contact Angle Measurement

Solutions of (20 wt.%) copolymer b-PAES of Examples 4 and 11 in DMAc (solvent from Sigma Aldrich) were prepared by stirring with a mechanical anchor for several hours at room temperature.

Flat dense polymeric films were prepared by casting each polymeric solution containing the copolymer b-PAES of Example 4 or 11 and the solvent over a suitable smooth glass support by means of an automatized casting knife at 40°C. The knife gap was set at 500 µm. After casting the films, the solvent was left to evaporate in a vacuum oven at 130°C for 4 hours.

For comparison, films of commercial polysulfone (PSU), namely UDEL^{®} P3500NT polysulfone supplied by Solvay, of commercial polyethersulfone (PES), namely Veradel^{®} PES 3000MP supplied by Solvay, and of TMBPF homopolymer (Example 14) were prepared in the same way.

These films were used for contact angle measurements. The contact angles towards water on dense films were evaluated at 25°C by using the Contact Angle System OCA Dataphysics according to ASTM D 5725-99. Values are average of at least 10 measurements. Volume drop was 2 microliters.

Results are summarized in Table 3.

The copolymers b-PAES from Examples 4 and 11 (according to the invention) were found to be more hydrophilic than the TMBPF homopolymer from Example 14 (not according to the invention) due to the incorporation of isosorbide in the polymer structure.

The copolymer b-PAES were also found to be more hydrophilic than the commercial polysulfone (PSU) and approaching that of the commercial polyethersulfone (PES).

Therefore the use of two distinct dihydroxy monomers: isosorbide (a bio-compatible and bio-based diol monomer) and TMBPF (a bisphenol monomer distinct from BPS and BPA) enabled a tuning of the hydrophilicity of the resulting copolymer b-PAES in order to achieve a hydrophilicity similar to PSU polymers comprising sulfone recurring units derived from BPA and to PES polymers comprising sulfone recurring units derived from BPS.

**Table 3**

| **Composition** | Water contact angle | |
|---|---|---|
| | Degree | Std Dev. |
| Copolymer b-PAES (Ex. 4) with 10% ISO | 87 | 3 |
| Copolymer b-PAES (Ex. 12) with 25% ISO | 92 | 3 |
| TMBPF homopolymer (Comparative Ex. 14) | 101 | 2 |
| Udel^{®} PSU P3500NT | 96 | 2 |
| Veradel^{®} PES 3000MP | 81 | 6 |

## Claims

1. A bio-based sulfone copolymer b-PAES, comprising:
a) recurring units (Rₐ) of formula (I): 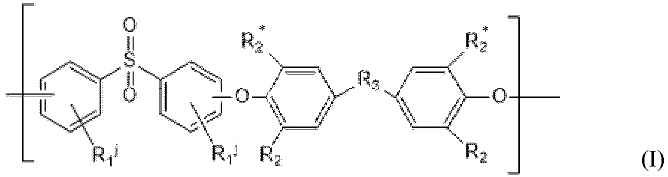 wherein:
- each R₁ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ; and - j is zero or an integer of 1 to 4;
- each R₂ is at each location independently selected from H or an alkyl having from 1 to 5 carbon atoms, preferably an alkyl having from 1 to 5 carbon atoms , more preferably methyl at each location,
- each R₂* is at each location independently selected from an alkyl having from 1 to 5 carbon atoms, preferably methyl at each location, and
- R₃ is represented by a cycloalkyl having from 5 to 8 carbon atoms or -CR^{p}R^{q}-, wherein each of R^{p} and R^{q} is independently selected from H, an alkyl having from 1 to 10 carbon atoms, an aromatic mono- or polynuclear group, or a cycloalkyl having from 5 to 8 carbon atoms, said aromatic mono- or polynuclear group or cycloalkyl being optionally substituted by at least one alkyl having from 1 to 10 carbon atoms; R₃ preferably being selected from -CH₂-, -C(CH₃)₂-, 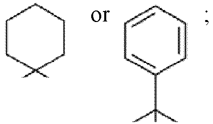 R₃ more preferably being selected from -CH₂- or -C(CH₃)₂-; and
b) recurring units (R_{b}) of formula (II) as shown below : 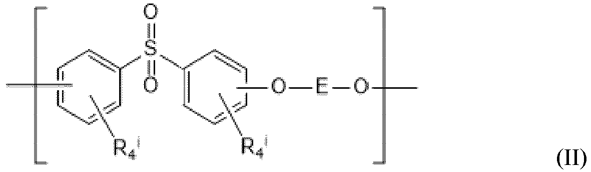 wherein:
- each R₄ is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ; and - i is zero or an integer of 1 to 4,
preferably R₄ and i in Formula (II) being the same as R₁ and j in Formula (I); and
- each of E, equal to or different from each other and at each occurrence, is selected from the group consisting of those of formulae (E'-I) to (E'-III):

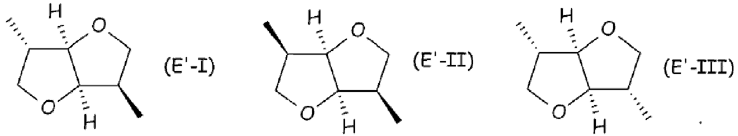

2. The bio-based sulfone copolymer b-PAES of claim 1, comprising
- at least 5 mol%, or at least 10 mol% of recurring units (Rb) with respect to all the recurring units of copolymer b-PAES,
and/or
- at most 80 mol%, or at most 70 mol%, or at most 60 mol%, or at most 50 mol%, or at most 40 mol%, or at most 30 mol%, of recurring units (Rb) with respect to all the recurring units of copolymer b-PAES.

3. The bio-based sulfone copolymer b-PAES of any one of the preceding claims, comprising
- at least 20 mol%, or at least 30 mol%, or at least 40 mol%, or at least 50 mol%, or at least 60 mol%, or at least 70 mol% of recurring units (Ra) with respect to all the recurring units of copolymer b-P AES,
and/or
- at most 95 mol%, or at most 90 mol%, or at most 85 mol%, or at most 80 mol%, or at most 75 mol%, of recurring units (Ra) with respect to all the recurring units of copolymer b-PAES.

4. The bio-based sulfone copolymer b-PAES of any one of the preceding claims, comprising a molar ratio of the recurring units (Rb) to the recurring units (Ra) of at least 5:95, or at least 10:90 and/or at most 95:5, or at most 90:10, or at most 50:50, or at most 30:70, or at most 25:75.

5. The bio-based sulfone copolymer b-PAES of any one of the preceding claims, wherein recurring units (R_{b}) are of formula selected from the group consisting of formulae (R_{b}-1), (R_{b}-2), (R_{b}-3), and any combinations thereof: 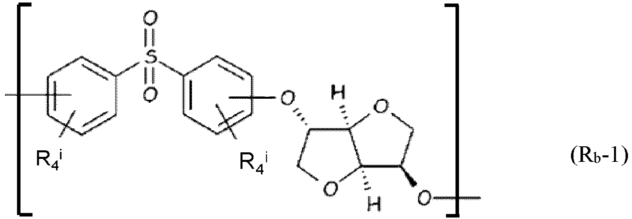 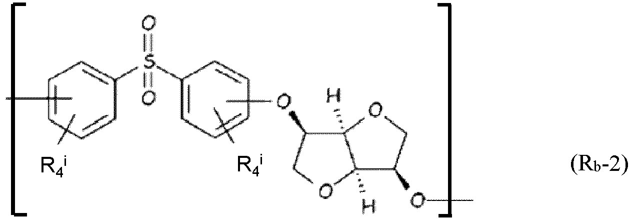 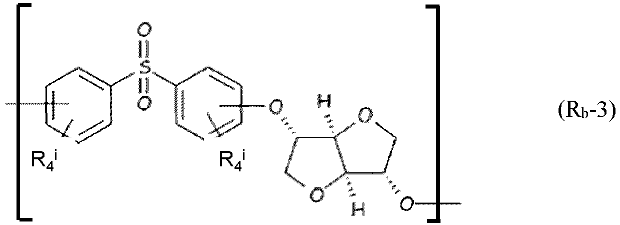 wherein R₄ and i have the same meaning as defined in Claim 1, preferably i=0.

6. The bio-based sulfone copolymer b-PAES of any one of the preceding claims, wherein the recurring units (Rₐ) are of formula (I*): 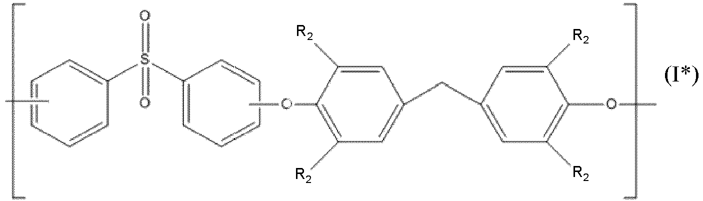 wherein each R₂ is at each location independently selected from an alkyl having from 1 to 5 carbon atoms, preferably a methyl group.

7. The bio-based sulfone copolymer b-PAES of any one of the preceding claims, having a weight averaged molecular weight (M_{w}), measured by gel-permeation chromatography using ASTM D5296, calibrated with polystyrene standards and performed using methylene chloride as a mobile phase, of :
- at least 50 kDa, or at least 60 kDa, or at least 70 kDa, and/or
- at most 200 kDa, or at most 180 kDa, or at most 170 kDa, or at most 150 kDa, or at most 140 kDa, or at most 120 kDa, or at most 115 kDa, or at most 100 kDa, or at most 90 kDa.

8. A process for manufacturing the bio-based sulfone copolymer b-PAES of any one of the preceding claims, comprising reacting in a reaction mixture comprising a polar aprotic solvent and in the presence of an alkali metal carbonate, a monomers mixture which contains :
- at least one aromatic dihydroxy monomer [dihydroxy (AA), hereinafter], comprising at least a monomer of formula (A): 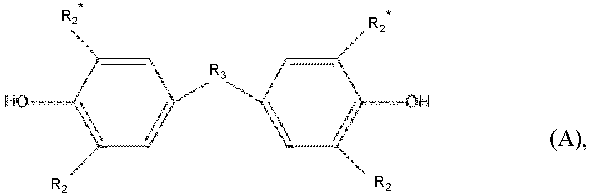 wherein
each R₂ is at each location independently selected from H or an alkyl having from 1 to 5 carbon atoms, preferably an alkyl having from 1 to 5 carbon atoms, more preferably methyl at each location;
each R₂* is at each location independently selected from an alkyl having from 1 to 5 carbon atoms, preferably methyl at each location, and
R₃ is represented by a cycloalkyl having from 5 to 8 carbon atoms or -CR^{p}R^{q}-, wherein each of R^{p} and R^{q} is independently selected from H, an alkyl having from 1 to 10 carbon atoms, an aromatic mono- or polynuclear group, or a cycloalkyl having from 5 to 8 carbon atoms, said aromatic mono- or polynuclear group or cycloalkyl being optionally substituted by at least one alkyl having from 1 to 10 carbon atoms; R₃ preferably being selected from -CH₂-, -C(CH₃)₂-, 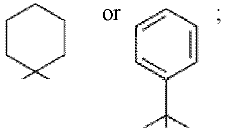 R₃ more preferably being selected from -CH₂- or -C(CH₃)₂-; and
- at least one 1,4:3,6-dianhydrohexitol [diol (BB), hereinafter] selected from the group consisting of isosorbide (1), isomannide (2) and isoidide (3) : 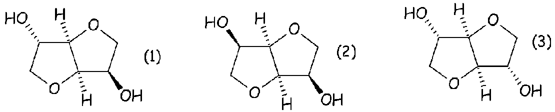
- at least one dihaloaryl compound [dihalo (CC), hereinafter] of formula (C) : 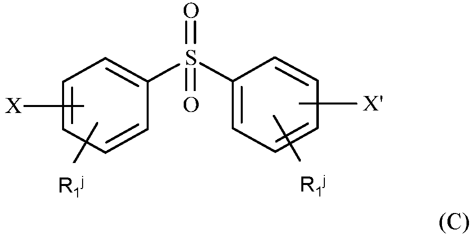
wherein:
- each of R₁, equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j is zero or is an integer from 0 to 4, preferably j=0 ; and
- X and X', equal to or different from each other, are independently a halogen atom, preferably Cl or F, more preferably Cl,
wherein the molar ratio between the overall amount of hydroxyl groups and overall amount of halo groups in the monomers mixture is from 0.95 to 1.05, preferably from 0.98 to 1.02, more preferably from 0.99 to 1.01, most preferably 1.0, so as to obtain a copolymer b-PAES.

9. The process according to claim 7, wherein the polar aprotic solvents is selected from the group consisting of 1,3-dimethyl-2-imidazolidinone (DMI), dimethylsulfoxide (DMSO), dimethylsulfone (DMSO2), diphenylsulfone, diethylsulfoxide, diethylsulfone, diisopropylsulfone, tetrahydrothiophene-1,1-dioxide (commonly called tetramethylene sulfone or sulfolane), N-Methyl-2-pyrrolidone (NMP), N-butylpyrrolidinone (NBP), N-ethylpyrrolidone (NEP), N,N'-dimethylacetamide ( DMAc), N,N'-dimethylpropyleneurea (DMPU), dimethylformamide (DMF), tetrahydrothiophene-1-monoxide, and mixtures thereof, preferably selected from the group consisting of 1,3-dimethyl-2-imidazolidinone (DMI), N-Methyl-2-pyrrolidone (NMP), dimethylsulfone (DMSO2), N-butylpyrrolidinone (NBP), N-Ethylpyrrolidone (NEP), N,N'-dimethylacetamide ( DMAc), N,N'-dimethylpropyleneurea (DMPU), dimethylformamide (DMF), and/or sulfolane.

10. The process according to claim 8 or 9, wherein the reaction is carried out so as to obtain a total wt% polymer concentration [total weight % polymer, hereinafter] with respect to the total weight of the reaction mixture :
- of at least 10 wt%, or at least 20 wt%, or at least 25 wt% polymer,
and/or
- of at most 60 wt%, or at most 50 wt%, or at most 40 wt% polymer.

11. The process according to any one of claims 8 to 10, wherein the alkali metal carbonate is selected from a group consisting of sodium carbonate, potassium carbonate, rubidium carbonate and cesium carbonate, preferably sodium carbonate and potassium carbonate.

12. The process according to any one of claims 8 to 11, wherein the amount of the alkali metal carbonate used, when expressed by the ratio of the equivalents of alkali metal (M) per equivalent of hydroxyl group (OH) [eq. (M)/eq. (OH)] is :
- at least 1, or at least 1.05, or at least 1.1, or at least 1.15, or at least 1.2, or at least 1.25, or at least 1.3 ; and/or
- at most 4, or at most 3.5, or at most 3, or at most 2.5, or at most 2.

13. Use of the copolymer b-PAES of any one of claims 1 to 7 or of the copolymer b-PAES manufactured by the process according to any one of claims 8 to 12 for the manufacture of membranes, coatings, films and sheets, and three-dimensional molded parts.

14. A polymer solution (SP) for preparing a membrane, which comprises the copolymer b-PAES of any one of claims 1 to 7 or from the copolymer b-PAES manufactured by the process according to any one of claims 8 to 12 in a polar organic solvent.

15. Shaped articles manufactured from the copolymer b-PAES of any one of claims 1 to 7 or from the copolymer b-PAES manufactured by the process according to any one of claims 8 to 12, being selected from the group consisting of membranes, melt processed films, solution processed films, melt process monofilaments and fibers, solution processed monofilaments, hollow fibers and solid fibers, coatings, printed objects, and injection and compression molded objects, preferably membranes being selected from membranes for bioprocessing and medical filtrations (such as hemodialysis membranes), membranes for food and beverage processing, membranes for water purification, membranes for waste water treatment and membranes for industrial process separations involving aqueous media.

## Patentansprüche

1. Biobasiertes Sulfon-Copolymer b-PAES umfassend:
a) Wiederholungseinheiten (Rₐ) der Formel (I): 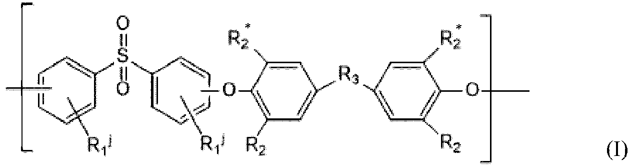 wobei:
- jedes R₁ unabhängig ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium; und
- j null oder eine ganze Zahl von 1 bis 4 ist;
- jedes R₂ an jeder Stelle unabhängig ausgewählt ist aus H oder einem Alkyl mit von 1 bis 5 Kohlenstoffatomen, vorzugsweise einem Alkyl mit 1 bis 5 Kohlenstoffatomen, bevorzugter Methyl an jeder Stelle;
- jedes R₂* an jeder Stelle unabhängig ausgewählt ist aus einem Alkyl mit von 1 bis 5 Kohlenstoffatomen, vorzugsweise Methyl an jeder Stelle, und
- R₃ dargestellt wird durch ein Cycloalkyl mit von 5 bis 8 Kohlenstoffatomen oder -CR^{p}R^{q}-, wobei jedes von R^{p} und R^{q} unabhängig ausgewählt ist aus H, einem Alkyl mit von 1 bis 10 Kohlenstoffatomen, einer aromatischen mono- oder polynukleären Gruppe oder einem Cycloalkyl mit von 5 bis 8 Kohlenstoffatomen, wobei die aromatische mono- oder polynukleäre Gruppe oder das Cycloalkyl gegebenenfalls mit wenigstens einem Alkyl mit von 1 bis 10 Kohlenstoffatomen substituiert ist; wobei R₃ vorzugsweise ausgewählt ist aus -CH₂-, -C(CH₃)₂-, 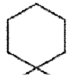 oder 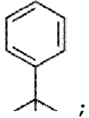 R₃ bevorzugter ausgewählt ist aus -CH₂- oder -C(CH₃)₂-; und
b) Wiederholungseinheiten (R_{b}) der nachstehend gezeigten Formel (II): 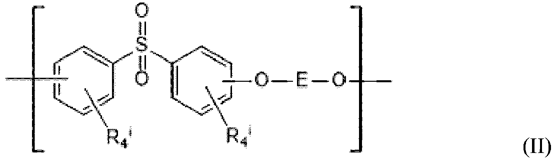 wobei:
- jedes R₄ unabhängig ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium; und
- i null oder eine ganze Zahl von 1 bis 4 ist, vorzugsweise R₄ und i in Formel (II) gleich wie R₁ und j in Formel (I) sind; und
- jedes E, bei jedem Auftreten gleich oder unterschiedlich, ausgewählt ist aus der Gruppe bestehend aus jenen der Formeln (E'-I) bis (E'-III):

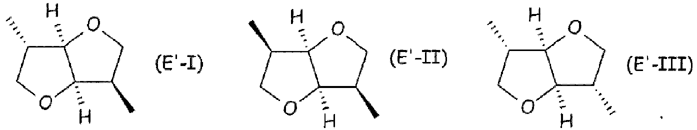

2. Biobasiertes Sulfon-Copolymer b-PAES nach Anspruch 1, umfassend
- wenigstens 5 mol-% oder wenigstens 10 mol-% an Wiederholungseinheiten (Rb) bezogen auf alle Wiederholungseinheiten des Copolymers b-PAES,
und/oder
- höchstens 80 mol-% oder höchstens 70 mol-% oder höchstens 60 mol-% oder höchstens 50 mol-% oder höchstens 40 mol-% oder höchstens 30 mol-% an Wiederholungseinheiten (Rb) bezogen auf alle Wiederholungseinheiten von Copolymer b-PAES.

3. Biobasiertes Sulfon-Copolymer b-PAES nach einem der vorstehenden Ansprüche, umfassend
- wenigstens 20 mol-% oder wenigstens 30 mol-% oder wenigstens 40 mol-% oder wenigstens 50 mol-% oder wenigstens 60 mol-% oder wenigstens 70 mol-% an Wiederholungseinheiten (Ra) bezogen auf alle Wiederholungseinheiten von Copolymer b-PAES,
und/oder
- höchstens 95 mol-% oder höchstens 90 mol-% oder höchstens 85 mol-% oder höchstens 80 mol-% oder höchstens 75 mol-% an Wiederholungseinheiten (Ra) bezogen auf alle Wiederholungseinheiten von Copolymer b-PAES.

4. Biobasiertes Sulfon-Copolymer b-PAES nach einem der vorstehenden Ansprüche, umfassend ein molares Verhältnis der Wiederholungseinheiten (Rb) zu den Wiederholungseinheiten (Ra) von wenigstens 5:95, wenigstens 10:90 und/oder höchstens 95:5, höchstens 90:10, höchstens 50:50, höchstens 30:70 oder höchstens 25:75.

5. Biobasiertes Sulfon-Copolymer b-PAES nach einem der vorstehenden Ansprüche, wobei Wiederholungseinheiten (R_{b}) von einer Formel ausgewählt aus der Gruppe bestehend aus Formeln (R_{b}-1), (R_{b}-2), (R_{b}-3) und beliebigen Kombinationen davon sind: 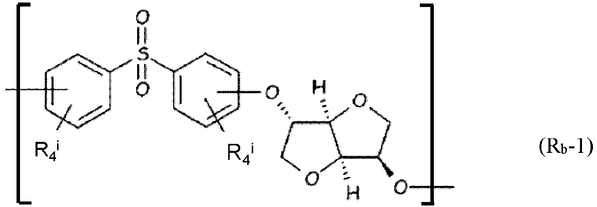 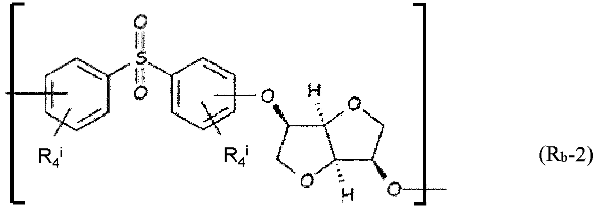 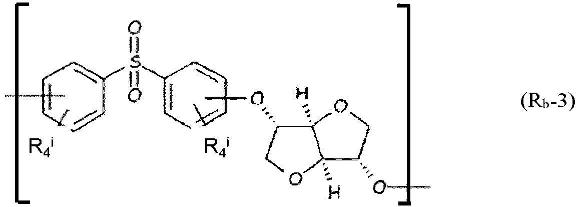 wobei R₄ und i die gleiche Bedeutung haben wie in Anspruch 1 definiert, vorzugsweise i=0.

6. Biobasiertes Sulfon-Copolymer b-PAES nach einem der vorstehenden Ansprüche, wobei die Wiederholungseinheiten (Rₐ) von Formel (I*) sind: 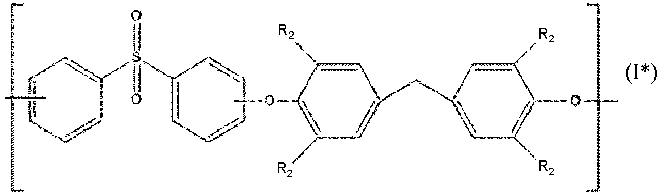 wobei jedes R₂ an jeder Stelle unabhängig ausgewählt ist aus einem Alkyl mit von 1 bis 5 Kohlenstoffatomen, vorzugsweise einer Methylgruppe.

7. Biobasiertes Sulfon-Copolymer b-PAES nach einem der vorstehenden Ansprüche mit einem gewichtsgemittelten Molekulargewicht (M_{w}), gemessen durch Gelpermeationschromatographie nach ASTM D5296, kalibriert mit Polystyrolstandards und durchgeführt unter Verwendung von Methylenchlorid als mobile Phase, von:
- wenigstens 50 kDa oder wenigstens 60 kDa oder wenigstens 70 kDa und/oder
- höchstens 200 kDa oder höchstens 180 kDa oder höchstens 170 kDa oder höchstens 150 kDa oder höchstens 140 kDa oder höchstens 120 kDa oder höchstens 115 kDa oder höchstens 100 kDa oder höchstens 90 kDa.

8. Verfahren zur Herstellung des biobasierten Sulfon-Copolymers b-PAES nach einem der vorstehenden Ansprüche, umfassend Umsetzen in einem Reaktionsgemisch, das ein polares aprotisches Lösungsmittel umfasst, und in Gegenwart eines Alkalimetallcarbonats, eines Monomergemischs, das enthält:
- wenigstens ein aromatisches Dihydroxymonomer [nachstehend Dihydroxy (AA)] umfassend wenigstens ein Monomer der Formel (A): 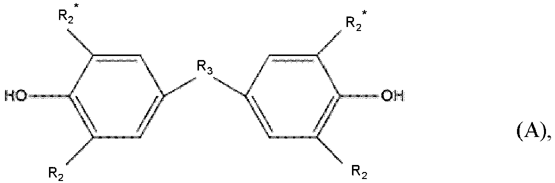 wobei
jedes R₂ an jeder Stelle unabhängig ausgewählt ist aus H oder einem Alkyl mit von 1 bis 5 Kohlenstoffatomen, vorzugsweise einem Alkyl mit von 1 bis 5 Kohlenstoffatomen, vorzugsweise Methyl an jeder Stelle; jedes R₂* an jeder Stelle unabhängig ausgewählt ist aus einem Alkyl mit von 1 bis 5 Kohlenstoffatomen, vorzugsweise Methyl an jeder Stelle, und
R₃ dargestellt wird durch ein Cycloalkyl mit von 5 bis 8 Kohlenstoffatomen oder -CR^{p}R^{q}-, wobei jedes von R^{p} und R^{q} unabhängig ausgewählt ist aus H, einem Alkyl mit von 1 bis 10 Kohlenstoffatomen, einer aromatische mono- oder polynukleären Gruppe oder einem Cycloalkyl mit von 5 bis 8 Kohlenstoffatomen, wobei die aromatische mono- oder polynukleäre Gruppe oder das Cycloalkyl gegebenenfalls mit wenigstens einem Alkyl mit von 1 bis 10 Kohlenstoffatomen substituiert ist; wobei R₃ vorzugsweise ausgewählt ist aus -CH₂-, -C(CH₃)₂-, 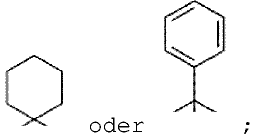 R₃ bevorzugter ausgewählt ist aus -CH₂- oder -C(CH₃)₂-; und
- wenigstens ein 1,4:3,6-Dianhydrohexitol [nachstehend Diol (BB)] ausgewählt aus der Gruppe bestehend aus Isosorbid (1), Isomannid (2) und Isodid (3): 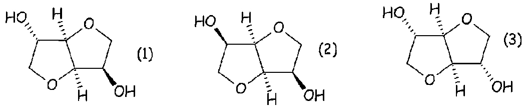
- wenigstens eine Dihalogenarylverbindung [nachstehend Dihalo (CC)] der Formel (C): 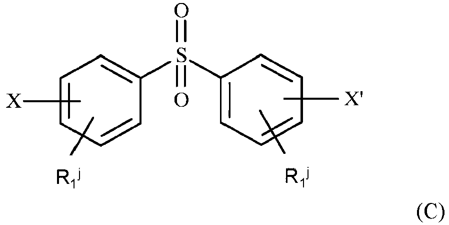
wobei:
- jedes R₁, gleich oder voneinander verschieden, ausgewählt ist aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium;
- j null ist oder eine ganze Zahl von 0 bis 4 ist, vorzugsweise j=0; und
- X und X', gleich oder voneinander verschieden, unabhängig ein Halogenatom, vorzugsweise Cl oder F, bevorzugter Cl, sind,
wobei das Molverhältnis zwischen der Gesamtmenge an Hydroxygruppen und der Gesamtmenge an Halogengruppen in dem Monomergemisch von 0,95 bis 1,05, vorzugsweise von 0,98 bis 1,02, bevorzugter von 0,99 bis 1,01, höchst bevorzugt 1,0, beträgt, um ein Copolymer b-PAES zu erhalten.

9. Verfahren nach Anspruch 7, wobei die polaren aprotischen Lösungsmittel ausgewählt sind aus der Gruppe bestehend aus 1,3-Dimethyl-2-imidazolidinon (DMI), Dimethylsulfoxid (DMSO), Dimethylsulfon (DMSO2), Diphenylsulfon, Diethylsulfoxid, Diethylsulfon, Diisopropylsulfon, Tetrahydrothiophen-1,1-dioxid (häufig als Tetramethylensulfon oder Sulfolan bezeichnet), N-Methyl-2-pyrrolidon (NMP), N-Butylpyrrolidinon (NBP), N-Ethylpyrrolidon (NEP), N,N'-Dimethylacetamid (DMAc), N,N'-Dimethylpropylenharnstoff (DMPU), Dimethylformamid (DMF), Tetrahydrothiophen-1-monoxid und Gemischen davon, vorzugsweise ausgewählt aus der Gruppe bestehend aus 1,3-Dimethyl-2-imidazolidinon (DMI), N-Methyl-2-pyrrolidon (NMP), Dimethylsulfon (DMSO2), N-Butylpyrrolidon (NBP), N-Ethylpyrrolidon (NEP), N,N'-Dimethylacetamid (DMAc), N,N'-Dimethylpropylenharnstoff (DMPU), Dimethylformamid (DMF) und/oder Sulfolan.

10. Verfahren nach Anspruch 8 oder 9, wobei die Umsetzung so durchgeführt wird, dass eine Gesamt-Polymerkonzentration in Gew.-% [nachstehend Gesamt-Gew.-% Polymer] bezogen auf das Gesamtgewicht des Reaktionsgemisches erhalten wird von:
- wenigstens 10 Gew.-% oder wenigstens 20 Gew.-% oder wenigstens 25 Gew.-% Polymer,
und/oder
- höchstens 60 Gew.-% oder höchstens 50 Gew.-% oder höchstens 40 Gew.-% Polymer.

11. Verfahren nach einem der Ansprüche 8 bis 10, wobei das Alkalimetallcarbonat ausgewählt ist aus einer Gruppe bestehend aus Natriumcarbonat, Kaliumcarbonat, Rubidiumcarbonat und Cäsiumcarbonat, vorzugsweise Natriumcarbonat und Kaliumcarbonat.

12. Verfahren nach einem der Ansprüche 8 bis 11, wobei die Menge des verwendeten Alkalimetallcarbonats, ausgedrückt durch das Verhältnis der Äquivalente des Alkalimetalls (M) pro Äquivalent an Hydroxygruppen (OH) [Äq. (M)/Äq. (OH)], beträgt:
- wenigstens 1 oder wenigstens 1,05 oder wenigstens 1,1 oder wenigstens 1,15 oder wenigstens 1,2 oder wenigstens 1,25 oder wenigstens 1,3; und/oder
- höchstens 4, höchstens 3,5, höchstens 3, höchstens 2,5 oder höchstens 2.

13. Verwendung des Copolymers b-PAES nach einem der Ansprüche 1 bis 7 oder des nach dem Verfahren nach einem der Ansprüche 8 bis 12 hergestellten Copolymers b-PAES zur Herstellung von Membranen, Beschichtungen, Filmen und Folien sowie dreidimensionalen Formkörpern.

14. Polymerlösung (SP) zur Herstellung einer Membran, umfassend das Copolymer b-PAES nach einem der Ansprüche 1 bis 7 oder das nach dem Verfahren nach einem der Ansprüche 8 bis 12 hergestellte Copolymer b-PAES in einem polaren organischen Lösungsmittel.

15. Formkörper, hergestellt aus dem Copolymer b-PAES nach einem der Ansprüche 1 bis 7 oder aus dem nach dem Verfahren nach einem der Ansprüche 8 bis 12 hergestellten Copolymer b-PAES, ausgewählt aus der Gruppe bestehend aus Membranen, schmelzverarbeiteten Folien, lösungsverarbeiteten Folien, Schmelzverfahren-Monofilamenten und -Fasern, lösungsverarbeiteten Monofilamenten, Hohlfasern und festen Fasern, Beschichtungen, bedruckten Gegenständen sowie Spritzguss- und Formpressgegenständen, vorzugsweise Membranen ausgewählt aus Membranen für Bioprozesse und medizinische Filtrationen (wie z.B. Hämodialysemembranen), Membranen für Lebensmittel- und Getränkeverarbeitung, Membranen für Wasserreinigung, Membranen für Abwasserbehandlung und Membranen für industrielle Prozesstrennungen mit wässrigen Medien.

## Revendications

1. Copolymère de sulfone biosourcé b-PAES, comprenant :
a) des motifs récurrents (Rₐ) de formule (I) : 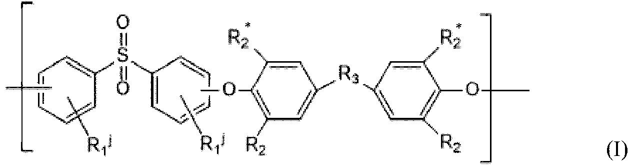 dans laquelle :
- chaque R₁ est indépendamment choisi dans le groupe constitué d'halogène, d'alkyle, d'alcényle, d'alcynyle, d'aryle, d'éther, de thioéther, d'acide carboxylique, d'ester, d'amide, d'imide, de sulfonate de métal alcalin ou alcalino-terreux, de sulfonate d'alkyle, de phosphonate de métal alcalin ou alcalino-terreux, de phosphonate d'alkyle, d'amine et d'ammonium quaternaire ; et
- j est zéro ou un entier de 1 à 4 ;
- chaque R₂ est à chaque emplacement indépendamment choisi parmi H ou un alkyle ayant de 1 à 5 atomes de carbone, de préférence un alkyle ayant de 1 à 5 atomes de carbone, plus préférablement méthyle à chaque emplacement,
- chaque R₂* est à chaque emplacement indépendamment choisi parmi un alkyle ayant de 1 à 5 atomes de carbone, de préférence méthyle à chaque emplacement, et
- R₃ est représenté par un cycloalkyle ayant de 5 à 8 atomes de carbone ou -CR^{p}R^{q}-, où chacun de R^{p} et R^{q} est indépendamment choisi parmi H, un alkyle ayant de 1 à 10 atomes de carbone, un groupe mono- ou polynucléaire aromatique, ou un cycloalkyle ayant de 5 à 8 atomes de carbone, ledit groupe aromatique mono- ou polynucléaire ou cycloalkyle étant éventuellement substitué par au moins un alkyle ayant de 1 à 10 atomes de carbone ; R₃ étant de préférence choisi parmi -CH₂-, -C(CH₃)₂-, 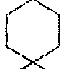 ou 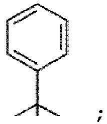 R₃ étant plus préférablement choisi parmi -CH₂- ou - C(CH₃)₂- ; et
b) des motifs récurrents (R_{b}) de formule (II) comme indiqué ci-dessous : 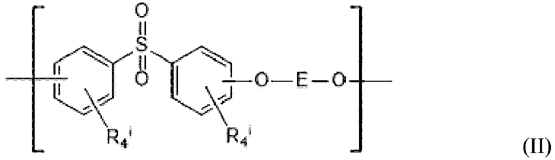 dans laquelle :
- chaque R₄ est indépendamment choisi dans le groupe constitué d'halogène, d'alkyle, d'alcényle, d'alcynyle, d'aryle, d'éther, de thioéther, d'acide carboxylique, d'ester, d'amide, d'imide, de sulfonate de métal alcalin ou alcalino-terreux, de sulfonate d'alkyle, de phosphonate de métal alcalin ou alcalino-terreux, de phosphonate d'alkyle, d'amine et d'ammonium quaternaire ; et
- i est zéro ou un entier de 1 à 4,
de préférence R₄ et i dans la formule (II) sont identiques à R₁ et j dans la formule (I) ; et
- chacun parmi E, égaux ou différents les uns des autres et à chaque occurrence, est choisi dans le groupe constitué de ceux des formules (E'-I) à (E'-III) :

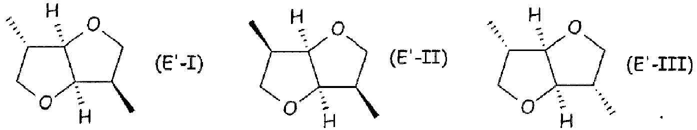

2. Copolymère de sulfone biosourcé b-PAES selon la revendication 1, comprenant
- au moins 5 % en moles ou au moins 10 % en moles de motifs récurrents (Rb) par rapport à tous les motifs récurrents du copolymère b-PAES,
et/ou
- au plus 80 % en moles, ou au plus 70 % en moles, ou au plus 60 % en moles, ou au plus 50 % en moles, ou au plus 40 % en moles, ou au plus 30 % en moles, de motifs récurrents (Rb) par rapport à tous les motifs récurrents du copolymère b-PAES.

3. Copolymère de sulfone biosourcé b-PAES selon l'une quelconque des revendications précédentes, comprenant
- au moins 20 % en moles, ou au moins 30 % en moles, ou au moins 40 % en moles, ou au moins 50 % en moles, ou au moins 60 % en moles, ou au moins 70 % en moles de motifs récurrents (Ra) par rapport à tous les motifs récurrents du copolymère b-PAES,
et/ou
- au plus 95 % en moles, ou au plus 90 % en moles, ou au plus 85 % en moles, ou au plus 80 % en moles, ou au plus 75 % en moles, de motifs récurrents (Ra) par rapport à tous les motifs récurrents du copolymère b-PAES.

4. Copolymère de sulfone biosourcé b-PAES selon l'une quelconque des revendications précédentes, comprenant un rapport molaire des motifs récurrents (Rb) sur les motifs récurrents (Ra) d'au moins 5:95, ou d'au moins 10:90 et/ou d'au plus 95:5, ou d'au plus 90:10, ou d'au plus 50:50, ou d'au plus 30:70, ou d'au plus 25:75.

5. Copolymère b-PAES de sulfone biosourcé selon l'une quelconque des revendications précédentes, dans lequel les motifs récurrents (R_{b}) sont de formule choisie dans le groupe constitué des formules (R_{b}-1), (R_{b}-2), (R_{b}-3), et toutes combinaisons de celles-ci : 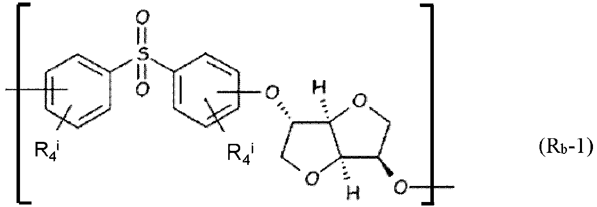 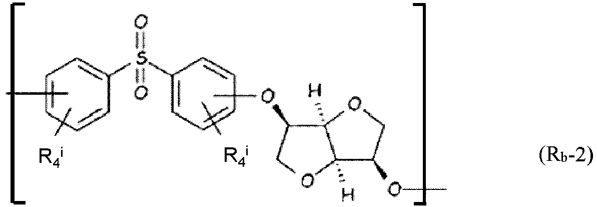 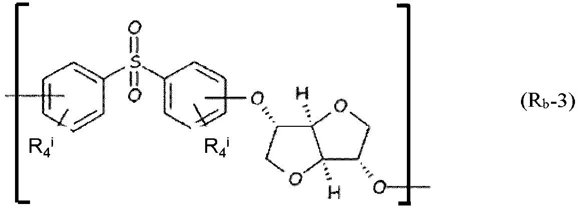 où R₄ et i ont la même signification que définie dans la revendication 1, de préférence i = 0.

6. Copolymère de sulfone biosourcé b-PAES selon l'une quelconque des revendications précédentes, dans lequel les motifs récurrents (Rₐ) sont de formule (I*) : 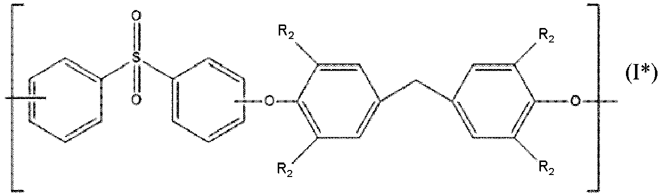 où chaque R₂ est à chaque emplacement indépendamment choisi parmi un alkyle ayant de 1 à 5 atomes de carbone, de préférence un groupe méthyle.

7. Copolymère de sulfone biosourcé b-PAES selon l'une quelconque des revendications précédentes, ayant un poids moléculaire moyen en poids (M_{w}), mesuré par chromatographie par perméation de gel en utilisant la norme ASTM D5296, étalonnée avec des étalons de polystyrène et réalisée en utilisant du chlorure de méthylène comme phase mobile, de :
- au moins 50 kDa, ou au moins 60 kDa, ou au moins 70 kDa, et/ou
- au plus 200 kDa, ou au plus 180 kDa, ou au plus 170 kDa, ou au plus 150 kDa, ou au plus 140 kDa, ou au plus 120 kDa, ou au plus 115 kDa, ou au plus 100 kDa, ou au plus 90 kDa.

8. Procédé de fabrication du copolymère de sulfone biosourcé b-PAES selon l'une quelconque des revendications précédentes, comprenant la mise en réaction dans un mélange réactionnel comprenant un solvant aprotique polaire et en présence d'un carbonate de métal alcalin, d'un mélange de monomères qui contient :
- au moins un monomère dihydroxy aromatique [dihydroxy (AA), ci-après], comprenant au moins un monomère de formule (A) : 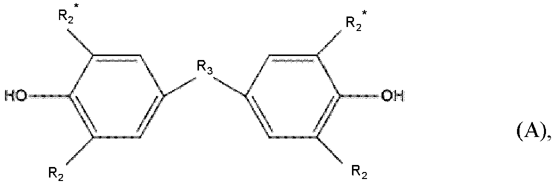 dans laquelle
chaque R₂ est à chaque emplacement indépendamment choisi parmi H ou un alkyle ayant de 1 à 5 atomes de carbone, de préférence un alkyle ayant de 1 à 5 atomes de carbone, plus préférablement un méthyle à chaque emplacement ;
chaque R₂* est à chaque emplacement indépendamment choisi parmi un alkyle ayant de 1 à 5 atomes de carbone, de préférence méthyle à chaque emplacement, et
R₃ est représenté par un cycloalkyle ayant de 5 à 8 atomes de carbone ou -CR^{p}R^{q}-, où chacun de R^{p} et R^{q} est indépendamment choisi parmi H, un alkyle ayant de 1 à 10 atomes de carbone, un groupe mono- ou polynucléaire aromatique, ou un cycloalkyle ayant de 5 à 8 atomes de carbone, ledit groupe aromatique mono- ou polynucléaire ou cycloalkyle étant éventuellement substitué par au moins un alkyle ayant de 1 à 10 atomes de carbone ; R₃ étant de préférence choisi parmi -CH₂-, -C(CH₃)₂-, 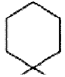 ou 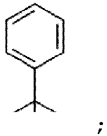
R₃ étant plus préférablement choisi parmi -CH₂- ou - C(CH₃)₂- ; et
- au moins un 1,4:3,6-dianhydrohexitol [diol (BB), ci-après] choisi dans le groupe constitué de l'isosorbide (1), de l'isomannide (2) et de l'isoidide (3) : 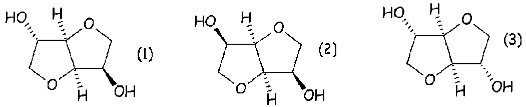
- au moins un composé dihalogénoaryle [dihalo (CC), ci-après] de formule (C) : 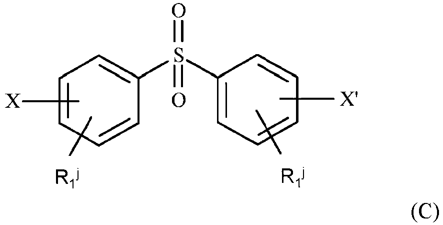
dans laquelle :
- chacun parmi R₁, égal ou différent l'un de l'autre, est choisi dans le groupe constitué d'halogène, d'alkyle, d'alcényle, d'alcynyle, d'aryle, d'éther, de thioéther, d'acide carboxylique, d'ester, d'amide, d'imide, de sulfonate de métal alcalin ou alcalino-terreux, de sulfonate d'alkyle, de phosphonate de métal alcalin ou alcalino-terreux, de phosphonate d'alkyle, d'amine et d'ammonium quaternaire ;
- j est zéro ou est un entier de 0 à 4, de préférence j = 0 ; et
- X et X', égaux ou différents l'un de l'autre, sont indépendamment un atome d'halogène, de préférence Cl ou F, plus préférablement Cl,
dans lequel le rapport molaire entre la quantité totale de groupes hydroxyle et la quantité totale de groupes halogéno dans le mélange de monomères est de 0,95 à 1,05, de préférence de 0,98 à 1,02, plus préférablement de 0,99 à 1,01, le plus préférablement de 1,0, de manière à obtenir un copolymère b-PAES.

9. Procédé selon la revendication 7, dans lequel le solvant aprotique polaire est choisi dans le groupe constitué de 1,3-diméthyl-2-imidazolidinone (DMI), diméthylsulfoxyde (DMSO), diméthylsulfone (DMSO2), diphénylsulfone, diéthylsulfoxyde, diéthylsulfone, diisopropylsulfone, tétrahydrothiophène-1,1-dioxyde (communément appelé tétraméthylène sulfone ou sulfolane), N-méthyl-2-pyrrolidone (NMP), N-butylpyrrolidinone (NBP), N-éthylpyrrolidone (NEP), N,N'-diméthylacétamide (DMAc), N,N'-diméthylpropylèneurée (DMPU), diméthylformamide (DMF), tétrahydrothiophène-1-monoxyde et leurs mélanges, de préférence choisi dans le groupe constitué de 1,3-diméthyl-2-imidazolidinone (DMI), N-méthyl-2-pyrrolidone (NMP), diméthylsulfone (DMSO2), N-butylpyrrolidinone (NBP), N-éthylpyrrolidone (NEP), N,N'-diméthylacétamide (DMAc), N,N'-diméthylpropylèneurée (DMPU), diméthylformamide (DMF) et/ou sulfolane.

10. Procédé selon la revendication 8 ou 9, dans lequel la réaction est effectuée de manière à obtenir une concentration de polymère en % en poids total [% en poids total de polymère, ci-après] par rapport au poids total du mélange réactionnel :
- d'au moins 10 % en poids, ou d'au moins 20 % en poids, ou d'au moins 25 % en poids de polymère,
et/ou
- d'au plus 60 % en poids, ou d'au plus 50 % en poids, ou d'au plus 40 % en poids de polymère.

11. Procédé selon l'une quelconque des revendications 8 à 10, dans lequel le carbonate de métal alcalin est choisi dans un groupe constitué du carbonate de sodium, du carbonate de potassium, du carbonate de rubidium et du carbonate de césium, de préférence du carbonate de sodium et du carbonate de potassium.

12. Procédé selon l'une quelconque des revendications 8 à 11, dans lequel la quantité de carbonate de métal alcalin utilisée, lorsqu'elle est exprimée par le rapport des équivalents de métal alcalin (M) par équivalent de groupe hydroxyle (OH) [éq. (M)/éq. (OH)] est :
- au moins 1, ou au moins 1,05, ou au moins 1,1, ou au moins 1,15, ou au moins 1,2, ou au moins 1,25, ou au moins 1,3 ; et/ou
- au plus 4, ou au plus 3,5, ou au plus 3, ou au plus 2,5, ou au plus 2.

13. Utilisation du copolymère b-PAES selon l'une quelconque des revendications 1 à 7 ou du copolymère b-PAES fabriqué par le procédé selon l'une quelconque des revendications 8 à 12 pour la fabrication de membranes, de revêtements, de films et de feuilles, et de pièces moulées tridimensionnelles.

14. Solution de polymère (SP) pour préparer une membrane, qui comprend le copolymère b-PAES selon l'une quelconque des revendications 1 à 7 ou à partir du copolymère b-PAES fabriqué par le procédé selon l'une quelconque des revendications 8 à 12 dans un solvant organique polaire.

15. Articles façonnés fabriqués à partir du copolymère b-PAES selon l'une quelconque des revendications 1 à 7 ou à partir du copolymère b-PAES fabriqué par le procédé selon l'une quelconque des revendications 8 à 12, qui sont choisis dans le groupe constitué des membranes, films traités par fusion, films traités en solution, monofilaments et fibres traité(e)s par fusion, monofilaments traités en solution, fibres creuses et fibres solides, revêtements, objets imprimés et objets moulés par injection et compression, de préférence les membranes étant choisies parmi les membranes pour une biotransformation et des filtrations médicales (telles que les membranes d'hémodialyse), les membranes pour le traitement des aliments et des boissons, les membranes pour la purification de l'eau, les membranes pour le traitement des eaux usées et les membranes pour les séparations de procédés industriels impliquant des milieux aqueux.
